Europäisches Patentamt

European Patent Office

Office européen des brevets

(19)

(11) **EP 1 156 660 A2**

(12) **EUROPEAN PATENT APPLICATION**

(43) Date of publication:
**21.11.2001 Bulletin 2001/47**

(51) Int Cl.[7]: **H04N 1/32**

(21) Application number: **00308905.9**

(22) Date of filing: **10.10.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **28.01.2000 JP 2000024719**
**09.02.2000 JP 2000038093**

(71) Applicant: **M. Ken Co. Ltd.**
**Tokyo (JP)**

(72) Inventor: **Liu, Zheng**
**Shibuya-ku, Tokyo (JP)**

(74) Representative: **Moir, Michael Christopher et al**
**Mathys & Squire**
**100 Gray's Inn Road**
**London WC1X 8AL (GB)**

Remarks:
Claims 11/12/17/23/26/27/31 are deemed to be abandoned due to non-payment of the claims fees (Rule 31 (2) EPC).

(54) **Device and method for detecting digital watermark information**

(57)     The present invention provides a method for detecting digital watermark information inserted in original image information from image information in which the digital watermark information is deleted, altered or deformed by executing deforming operation to the original image information. The digital watermark information detecting device 100 comprises: means 2 which calculates a matrix and a transposed matrix about a system matrix from an obtained image information; means 3 which calculates an estimated initial image vector from the image information; means 4 which calculates a residual vector of the image information; means 5 which calculates a square error of the residual vector; means 6 which determines whether or not the residual vector square error value is a minimum value; means 7 which calculates a correcting vector; means 8 which calculates a reverse-rotated image; means 9 which substitutes an output from the reverse-rotated image calculating means with a value calculated by the estimated image vector calculating means; means 10 which obtains an estimated value of the original image information when the minimum value of the residual vector square error is detected; and digital watermark information displaying means 11 which retrieves digital watermark information from the estimated image information of the original image information and which displays the retrieved digital watermark information.

Fig. 5

```
            START
              │
         CREARE Hᵀ ──── ST-1
              │
         OBTAIN g₀″ ──── ST-2
              │
  ┌──► CALCULATE RESIDUAL g′ -Hg𝐤″ ──── ST-3
  │           │
  │  CALCULATE SQUARE ERROR H = (g′-Hg𝐤″)ᵀ(g′-Hg𝐤″) ──── ST-4
  │           │                      ST-5      ST-6
  │        ◇ If1< ε ? ◇ ──Yes──► □ ──► END
  │           │
  │           No
  │  CALCULATE CORRECTING VECTOR αHᵀ(g′ -Hg𝐤″) ──── ST-7
  │           │
  └── OBTAIN REVERSE-ROTATED IMAGE g𝐤″₊₁ =g𝐤″+ αHᵀ(g′ -Hg𝐤″) ──── ST-8
```

EP 1 156 660 A2

**Description**

BACKGROUND OF THE INVENTION

1. Field of the Invention

The present invention relates to a device and a method for detecting digital watermark information, and more specifically, to a device and a method for detecting digital watermark information, capable of detecting original digital watermark information inserted in original image information, even when the original image information in which the digital watermark information inserted is deleted, deformed or altered by tampering. The present invention also relates to a device and a method for detecting digital watermark information, capable of identifying the kind of deforming operation performed from an obtained subject image, reproducing the original image from the obtained image tampered by the kind of deforming operation, and detecting the digital watermark information originally inserted in the original image information even when the original image information in which the digital watermark information is inserted has been deleted, deformed or altered by tampering.

2. Description of the Related Art

The still picture digital watermark technology has been utilized for secretly embedding information unique to an author in a still picture, as a technology to provide basis for claiming proprietary right.

In recent years, with an increasing amount of distribution of multimedia information through the use of Internet, application of the digital watermark technology has been drawing attention. At the same time, however, malicious conduct is on increase, in which watermark information embedded in various kinds of images is deformed, altered or deleted for the purpose of avoiding proprietary duty, and therefore development of a method for preventing these kinds of illegal act is an urgent requirement.

In the increase of the tampering in which the digital watermark information is deformed, altered or deleted, it is commonly known that the digital watermark information can be easily deleted, deformed or altered by purposefully executing such an operation as enlarging or reducing, and rotating the original image information.

For example, the digital watermark information can be easily deleted by performing the rotating deforming operation to the original image information.

Specifically, if the image in which the digital watermark information is embedded is deformed by rotation at a certain angle, then it becomes impossible to accurately detect the digital watermark information.

That is, when such a deforming operation as described above is performed to original image information, the image information itself will not be entirely lost by the deforming operation even if quality of the image may be slightly lowered, since the image information often comprises identical information shared by mutually adjacent pixels. However, the digital watermark information, which consist of a randomly laid out binary values of 0 and 1, can be deleted by an averaging operation utilized in the above deforming operation. For this reason, the original digital watermark information can often become illegible, or altered into digital watermark information which differs from the original digital watermark information.

Because those who intend to do illegal act can delete the digital watermark information without hopelessly deteriorating the quality of the image itself, such means is now practiced very often.

At present, commonly employed methods for wrongdoing (attack) the digital watermark information include a rotating deforming operation and an enlarging/reducing deforming operation for example, performed to information processed by an affine transformation method.

Further, methods commonly employed to the rotating deforming operation and the enlarging/reducing deforming operation includes a linear interpolation method and a nearest-neighborhood method by means of an affine transformation method.

Specifically, in such a tampering (attack), the rotating deforming operation and enlarging/reducing deforming operation executed to the original image will not cause a great damage to the original image itself, yet intensity of the embedded digital watermark information will be decreased, sometime to an undetectable degree.

Since there has been no effective and reliable preventing method against such tampering, development of the preventing method has been an urgent requirement. Another example of the operation by which the digital watermark is easily deleted or made illegible is a deforming operation by enlarging/reducing the image.

Specifically, if the size of an original image in which the digital watermark information is embedded is changed from an image size of the original image by enlarging/reducing the image, the digital watermark information can be deleted, or shifted from a location of original embedment due to addition of black information. Thus, it becomes impossible to accurately detect the digital watermark information once the image is enlarged or reduced.

Particularly, the digital watermark information has a characteristic that can be easily deleted by the deformation caused by the enlarging/reducing deforming operation.

In other words, if the image in which digital watermark information is embedded is enlarged/reduced by using a certain enlarging/reducin g rate, then the digital watermark information becomes unable to be detected correctly.

More specifically, if such a deforming operation as described above is performed to the original image information, the original image information itself will not be totally lost even if quality of the image may be slightly lowered, since the image information often comprises identical information shared by mutually adjacent pixels. However, the digital watermark information, which consists of randomly laid out binary values of 0 and 1, can be deleted by an averaging operation utilized in the above deforming operation. For this reason, the original digital watermark information can often become illegible, or even if legible, become altered into digital watermark information which differs from the original digital watermark information.

Because those who intend to do wrong act can delete the digital watermark information without hopelessly deteriorating the quality of the image itself, such means is now practiced very often.

At present, a commonly employed method to counter such a tampering include a linear interpolation method by means of an affine transformation method, for bringing the enlarged or reduced image back into the original size, or bringing the rotated image back to the original image by using an estimated angle of rotation.

However, the linear interpolation method by means of an affine transformation can decrease intensity of the embedded watermark to an undetectable degree.

Further, when the original image is not obtained, the size of the original image is not available, and it is therefore difficult to identify the size of the original image from the obtained image which is already enlarged/reduced.

Thus, since there has been conventionally no effective and reliable defending method against such tampering, development of the method has been an urgent requirement.

SUMMARY OF THE INVENTION

It is therefore an object of at least the preferred embodiments of the present invention to improve the above described shortcomings in the prior art, thereby to provide a method and a device for detecting digital watermark information, capable of reliably detecting an original digital watermark information embedded in original image information, from image information, particularly from image information made by rotating the original image thereby having the original digital watermark information deleted, altered or deformed.

Further, it is another such object to provide a device and a method for detecting digital watermark information necessary for protecting proprietary right to the image information from illegal infringement, by making possible to detect the original digital watermark information which is still image information distributed in the market prepared illegally after executing the rotating deforming operation to the original still image information which contains the predetermined digital watermark information.

Further, it is another such object to improve the above described shortcomings in the prior art, thereby to provide a method and a device for determining whether or not deformed image information is formed by enlarging/reducing an original image from the deformed image information in which the digital watermark information has been deleted from the image after the deforming operation, or in which it has become illegible, as a result of enlarging or reducing deforming operation to original image information containing digital watermark information, and to provide a method and a device for detecting an image size of an original image by identifying whether or not the deformed image information is enlarged/reduced by using to what degree enlarging/reducing rate to the original image. At the same time, it is to provide a method for detecting digital watermark information, capable of reliably detecting original digital watermark information embedded in original image information, from the deformed image information.

Further, another such object is to provide methods for detecting a size of an original image and digital watermark, necessary for protecting proprietary right to the image information from illegal infringement, by making possible to detect the original digital watermark information from still image information distributed in the market prepared illegally after executing enlarging or reducing operation by a third person to the original still image information which contains the predetermined digital watermark information and whose origin is definite.

A first aspect of the present invention provides a digital watermark information detecting device comprising: analyzing means which analyzes an obtained subject image information expected to contain obtained digital watermark information, therein; image processing information determining means which determines whether the subject image information is image information subjected to a rotating deforming operation or image information subjected to an enlarging/reducing deforming operation; characteristic value calculating means which calculates a value of a predetermined characteristic to the subject image information based on a result of the above analysis and determination; image information estimating means which estimates image information of the subject image information by analyzing the characteristic value; and digital watermark information retrieving means which retrieves digital watermark information contained in the estimated image information.

A second aspect of the present invention provides a digital watermark information detecting device comprising:

image information analyzing means for an obtained image; matrix calculating means which calculates a matrix and a transposed matrix about a system matrix, from the image information; estimated initial image vector calculating means which calculates an estimated initial image vector from the image information; residual vector calculating means which calculates a residual vector between the image vector in the image information and a value obtained by multiplying the estimated initial image vector with the matrix; residual vector square error calculating means which calculates a square error of the residual vector; square error value determining means which determines whether or not the residual vector square error value is a minimum value; correcting vector calculating means which calculates a correcting vector; reverse-rotated image calculating means which calculates a reverse-rotated image; adding means which adds an output from the reverse-rotated image calculating means to a value calculated by the estimated image vector calculating means; means which obtains an estimated value of the original image information from the minimum value of the residual vector square error when the square error value determining means detects the minimum value of the residual vector square error; digital watermark information displaying means which retrieves digital watermark information from the estimated image information of the original image information and which displays the retrieved digital watermark information.

Next, a third aspect of the present invention provides a digital watermark information detecting method comprising the steps of: obtaining a subject image information expected to contain digital watermark information; performing analysis on the subject image information, thereby analyzing and determining whether the subject image information is image information subjected to a rotating deforming operation or image information subjected to an enlarging/reducing deforming operation; obtaining a value of a predetermined characteristic to the subject image information based on a result of the above analysis and determination; estimating image information of the subject image information by analyzing the characteristic value; and retrieving digital watermark information contained in the estimated image information.

Further, a fourth aspect of the present invention provides a digital watermark information detecting method comprising the steps of: obtaining image information; determining whether or not the obtained image information was subjected to a rotating deforming operation; calculating a matrix and a transposed matrix about a system matrix from the image information deformed by rotation; calculating an estimated initial image vector from the image information; calculating a residual vector between the image vector in the image information and a value obtained by multiplying the estimated initial image vector with the matrix; calculating a square error of the residual vector; determining whether or not the residual vector square error value is a minimum value; calculating a correcting vector and calculating a reverse-rotated image when the square error value of the residual vector is determined not to be the minimum value; adding the calculated reverse-rotated image information to a value calculated by the estimated image vector calculating means; repeating the residual vector square error calculation as necessary; estimating original image information from the minimum square error value when the square error value of the residual vector is determined to be the minimum value; and retrieving digital watermark information from the estimated original image information.

Further, a fifth aspect of the present invention provides a recording medium storing a program for executing a digital watermark information detecting method by computer, the method comprising: a first step of obtaining image information; a second step of determining whether or not the obtained image information was subjected to a rotating deforming operation; a third step of calculating a matrix and a transposed matrix about a system matrix from the image information deformed by rotation; a fourth step of calculating an estimated initial image vector from the image information; a fifth step of calculating a residual vector between the image vector in the image information and a value obtained by multiplying the estimated initial image vector with the matrix; a sixth step of calculating a square error of the residual vector; a seventh step of determining whether or not the residual vector square error value is a minimum value; an eighth step of calculating a correcting vector when the square error value of the residual vector is determined not to be the minimum value; a ninth step of calculating a reverse-rotated image from the correcting vector; a tenth step of adding the reverse-rotated image information thus obtained to a value calculated by the estimated image vector calculating means; an eleventh step of repeating the residual vector square error calculation as necessary; a twelfth step of estimating original image information from the minimum square error value when the square error value of the residual vector is determined to be the minimum value; and a step of retrieving digital watermark information from the estimated original image information.

On the other hand, a sixth aspect of the present invention provides an original image deforming-method detecting method, comprising the steps of: embedding a predetermined reference information signal to a predetermined location of a Fourier-space image prepared by Fourier transforming an obtained subject image; reverse-Fourier-transforming the Fourier-space image into an image-space image; individually changing the image size of the image-space image by using each one of a plurality of enlarging/reducing rates selected from a predetermined range of the enlarging/reducing rates; Fourier transforming again each of the differently-sized image-space images into Fourier-space images; detecting frequency components of the embedded reference information signal previously embedded into the image information from each of the Fourier-space images; arranging the frequency components of a plurality of the reference information signal detected from the a second Fourier-space images of a plurality of the image-space images each having a different size from the other, sequentially according to the size of the enlarging/reducing rates; and determining that the subject image was made by enlarging/reducing a prescribed original image when it can be determined that there is a frequency component value at a certain enlarging/reducing rate, outstanding from surrounding frequency component values.

A seventh aspect of the present invention provides an original image size detecting method comprising the steps of: embedding a predetermined reference information signal to a predetermined location of a Fourier-space image prepared by Fourier transforming an obtained image; reverse-Fourier-transforming the Fourier-space image into an image-space image; individually changing the image size of the image-space image using each one of a plurality of enlarging/reducing rates selected from a predetermined range of the enlarging/reducing rates; Fourier transforming again each of the differently-sized image-space images into Fourier-space images; detecting frequency component values of the embedded reference information signal previously embedded into the image to be inspected, from each of the Fourier-space images; arranging the frequency components of said reference information signal detected from the Fourier-space images of the image-space images each having a different size from the other, sequentially according to the size of the enlarging/reducing rates; and determining, when there is a frequency component value at a certain enlarging/reducing rate outstanding from surrounding frequency component values, that the obtained image was made by enlarging/reduci ng an obtained original image at the enlarging/reducing rate corresponding to a frequency component value which is outstanding from surrounding frequency component value.

Further, an eighth aspect of the present invention provides a digital-watermark detecting method arranged to perform the steps of: reproducing an original image by applying to an obtained subject image a reciprocal number of the enlarging/reducing rate at which the size of the original image was altered to that of the subject image, the rate being obtained by the second aspect of the present invention; and detecting the reproduced original image for a watermark.

A ninth aspect of the present invention provides an original-image-size detecting device, for detecting the size of the original image from an obtained image, the device comprising: first Fourier transforming means which Fourier transforms the obtained image into a first Fourier-space image; reference information signal embedding means which embeds a predetermined reference information signal at a predetermined location of the Fourier-space image prepared by Fourier transforming the obtained image; reverse Fourier transforming means which reverse-Fourier-transforms the Fourier-space image into which the reference information signal had been embedded therein, into an image-space image ; enlarging/reducing rate storing means which stores a plurality of enlarging/reducing rates for changing the size of the image-space image; image-size changing means which sequentially selects desired enlarging/reducing rates from the enlarging/reducing rate storing means, and sequentially and individually changes the image size of the image-space image by individually using each of a plurality of the selected enlarging/reducing rates; second Fourier transforming means which Fourier again transforms each of the image-space images the image size of which being changed, respectively, into second Fourier-space images; frequency component value detecting means which detects a frequency component value of the reference information signal from each of the second Fourier-space images; frequency component value arranging means which arrays a plurality of frequency component values obtained from each of the second Fourier-space images into a predetermined sequence according to the enlarging/reducing rates; outstanding frequency component value determining means which determines whether or not there is a frequency component value outstanding from surrounding frequency component values; and original-image size identifying means which determines, when the outstanding frequency component is found, that the enlarging/reducing rate corresponding to the outstanding frequency component value is the enlarging/reducing rate whereby the image size of said obtained image had been changed from that of said original image.

On the other hand, a tenth aspect of the present invention provides a recording medium storing a program for executing an original image size detecting method, the method comprising:

a first step of obtaining a subject image which looks similar to an original image from a known source but whose digital watermark information is not legible;

a second step of Fourier transforming the obtained subject image into a first Fourier-space image;

a third step of embedding a predetermined reference information signal to a predetermined location of the first Fourier-space image;

a fourth step of reverse-Fourier-transforming the Fourier-space image provided with the reference information signal into an image-space image;

a fifth step of individually changing the size of the image-space image using each one of a plurality of enlarging/ reducing rates selected from a predetermined range of the enlarging/reducing rates;

a six step of Fourier transforming again each of the differently-sized image-space images into second Fourier-space images;

a seventh step of detecting a frequency component value of the embedded reference information signal previously embedded into said Fourier-space images, from each of the Fourier-space images;

an eighth step of arranging each of the detected frequency components of said reference information signal, sequentially according to the size of the enlarging/reducing rates; and

a ninth step of determining whether or not there is a frequency component value outstanding from surrounding frequency component values at a certain enlarging/reducing rate among said sequentially arranged frequency component values, and determining, when there is the frequency component value outstanding from surrounding frequency component values, that the obtained subject image was made from said original image by changing said image size with applying the enlarging/reducing rate corresponding to said outstanding frequency component value, to said original image.

Further an eleventh aspect of the present invention provides a recording medium storing a program for executing an original image digital watermark detecting method, the method comprising:

a first step of obtaining a subject image which looks similar to an original image from a known source but whose digital watermark information is not legible;

a second step of Fourier transforming the subject image into a first Fourier-space image;

a third step of embedding a predetermined reference information signal to a predetermined location of the first Fourier-space image;

a fourth step of reverse-Fourier-transforming the Fourier-space image provided with the reference information signal into an image-space image;

a fifth step of individually changing the size of the image-space image using each one of a plurality of enlarging/reducing rates selected from a predetermined range of the enlarging/reducing rates;

a six step of Fourier transforming again each of the differently-sized image-space images into second Fourier-space images;

a seventh step of detecting a frequency component value of the embedded reference information signal previously embedded into said Fourier-space images, from each of the Fourier-space images;

an eighth step of arranging each of the detected frequency components of said reference information signal, sequentially according to the size of the enlarging/reducing rates; and

a ninth step of determining whether or not there is a frequency component value outstanding from surrounding frequency component values at a certain enlarging/reducing rate among said sequentially arranged frequency component values, and determining, when there is the frequency component value outstanding from surrounding frequency component values, that the obtained subject image was made from said original image by changing said image size with applying the enlarging/reducing rate corresponding to said outstanding frequency component value, to said original image.

a tenth step of reproducing an original image by applying a reciprocal number of the enlarging/reducing rate obtained in the ninth step; and

an eleventh step of determining the original image for watermark information.

Since the digital watermark information detecting device and the digital watermark information detecting method according to the present invention utilizes one or more of the technical configurations described above, the present invention can make possible to easily detect an original digital watermark information from an illegally prepared still image information being distributed in the market, which was created by a third person through a rotating deforming operation and so on executed to original image information which is a still image containing a predetermined digital watermark information. The present invention thereby can make possible to determine whether or not the image information being distributed in the market is made by illegally altering, deforming or deleting a predetermined digital watermark information contained in the original image information for a purpose of illegal sales without consent by the proprietor. Thus, the present invention can provide a useful means for enabling the proprietor to detect illegal infringement.

On the other hand, the original image deforming-method detecting method, the original image size detecting method and the digital-watermark detecting method according to the present invention utilizes one or more of the technical configurations described above. Therefore, the present invention can make it possible to easily detect what kind of deforming operation was performed to the original image, from illegally prepared still image information being distributed in the market, which was created by a third person through an enlarging operation or a reducing operation executed to the original image information which is a still image containing a predetermined digital watermark information. The present invention thereby can make possible to determine whether or not the image information being distributed in the market is made by illegally deleting, or making illegible, a predetermined digital watermark information contained in the original image information for a purpose of illegal sales without consent of the proprietor. Thus, the present invention can provide a useful means for enabling the proprietor to detect illegal infringement.

Preferred features of the invention are as set out in the dependent claims, the substance of which are deemed repeated here as consistory clauses.

BRIEF DESCRIPTION OF THE DRAWINGS

Fig. 1 is a block diagram showing a constitution of an embodiment of a digital watermark information detecting device according to the present invention;

Fig. 2 is a diagram showing examples of a method for deforming image information;

Fig. 3(A) and 3(B) are diagrams illustrating an example of linear interpolation method used when deforming the image information;

Fig. 4 is a diagram illustrating how image information is altered when the image information is deformed by rotation;

Fig. 5 is a flowchart showing steps of operations in an embodiment of a digital watermark information detecting method according to the present invention;

Fig. 6 is a flowchart showing steps of operations in another embodiment of the digital watermark information detecting method according to the present invention;

Fig. 7 is a diagram illustrating an example of a method according to the present invention, for determining whether or not a still image is deformed by rotation;

Fig. 8 is a diagram illustrating a calculation procedure in a method for obtaining an estimated image value according to the present invention;

Fig. 9 is a diagram illustrating a calculation procedure in the method for obtaining an estimated image value according to the present invention;

Fig. 10 is a diagram illustrating a calculation procedure in the method for obtaining an estimated image value according to the present invention;

Fig. 11 a diagram illustrating a calculation procedure in the method for obtaining an estimated image value according to the present invention;

Fig. 12 a diagram illustrating a calculation procedure in the method for obtaining an estimated image value according to the present invention;

Fig. 13 a diagram illustrating a calculation procedure in the method for obtaining an estimated image value according to the present invention;

Fig. 14 is a graph showing a calculation result in the method for obtaining an estimated image value according to the present invention;

Fig. 15 is a graph showing a calculation result in the method for obtaining an estimated image value according to the present invention;

Fig. 16 is a block diagram showing a constitution of an embodiment of a device for detecting a deforming method applied to an original image, a device for detecting the size of the original image, and a device for detecting a digital watermark, according to the present invention;

Fig. 17 is a diagram showing a state of a signal frequency of an embedded predetermined signal when an image having the signal embedded in an image-space image is Fourier transformed into a Fourier-space image;

Fig. 18 is a diagram showing a state of a signal frequency of an embedded predetermined signal when an image having the signal embedded in an Fourier-space image is reverse-Fourier-transformed into an image-space image;

Fig. 19(A) through Fig. 19(C) are diagrams showing a location of a frequency when a signal cut out from a one-dimensional signal without changing the size of image is Fourier transformed;

Fig. 20(A) through Fig. 20(C) are diagrams showing a location of a frequency when a signal cut out from a one-dimensional signal after reducing the size of image is Fourier transformed;

Fig. 21 (A) through Fig. 21(C) are diagrams showing a location of a frequency when a signal cut out from a one-dimensional signal after enlarging the size of image is Fourier transformed;

Fig. 22 is a diagram showing the locations of the frequency obtained in Fig. 19 through Fig. 21 are shown in one diagram;

Fig. 23(A) and Fig. 23(B) are diagrams showing how location of embedment of an embedded signal shifts when a two-dimensional signal, i.e. an image containing the embedded signal, is enlarged/reduced and then Fourier transformed;

Fig. 24 is a graph showing an example of relationship between the change of enlargement/reduction rate and an average value of frequency components of the location of embedment of the embedded signal, when the image containing the embedded signal is enlarged/reduced and then Fourier transformed;

Fig. 25 is a flowchart showing an example of an operation procedure of a method for detecting a deforming method applied to an original image, a method for detecting the size of the original image, and a method for detecting a digital watermark, according to the present invention;

Fig. 26 is a diagram illustrating such steps as embedding of a reference information signal, Fourier transforming, and cutting of a block image after the enlarging/reducing deforming operation in a method for detecting a deforming method applied to an original image, a method for detecting the size of the original image, and a method for detecting a digital watermark, according to the present invention;

Fig. 27 is a diagram showing how a location of the reference information signal embedded into the original image is shifted by the enlarging/reducing deforming operation;

Fig. 28 is a diagram showing the enlarging/reducing deforming operation being performed to an obtained original image;

Fig. 29 is a graph showing average values of frequency components detected when a subject image is not enlarged or reduced;

Fig. 30 is a graph showing average values of the frequency components detected when an obtained image is reduced by the rate 1.2; and

Fig. 31 is a graph showing average values of the frequency components detected when a subject image is enlarged by the rate 0.8.

DETAILED DESCRIPTION OF THE PREFERRED EMBODIMENTS

Hereinafter, embodiments of a device and a method for detecting digital watermark information according to the present invention will be described in detail with reference to the accompanying drawings.

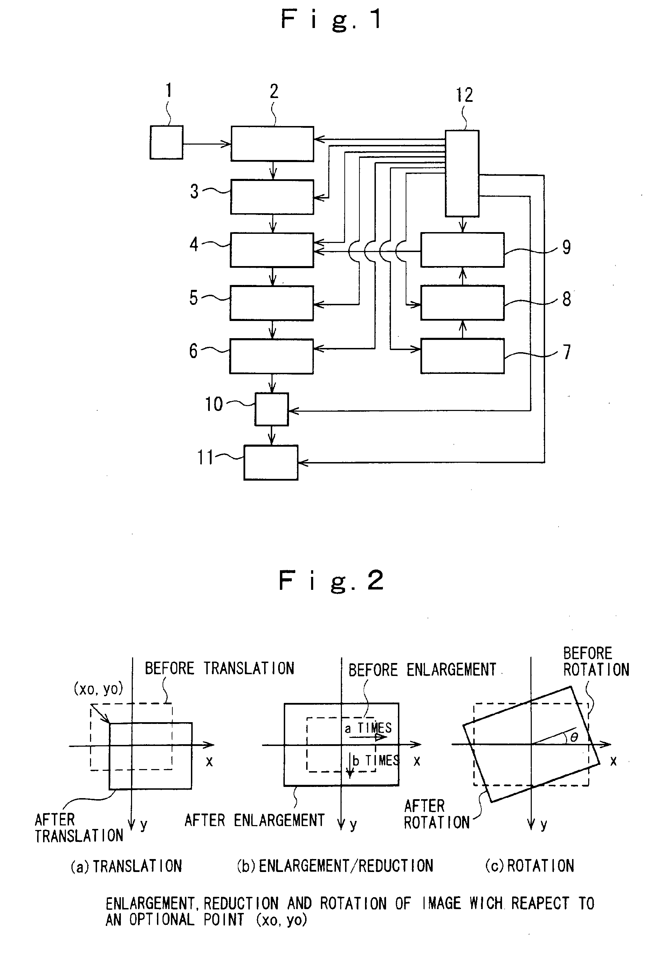

Specifically, Fig. 1 is a block diagram showing a configuration of a digital watermark information detecting device 100 according to the present invention. In this figure, the digital watermark information detecting device 100 comprises: image information analyzing means 1 for an obtained subject image; matrix calculating means 2 which calculates a matrix and a transposed matrix about a system matrix, from the image information; estimated initial image vector calculating means 3 which calculates an estimated initial image vector from the image information; residual vector calculating means 4 which calculates a residual vector between the image vector in the image information and a value obtained by multiplying the estimated initial image vector with the matrix; residual vector square error calculating means 5 which calculates a square error of the residual vector; square error value determining means 6 which determines whether or not the residual vector square error value of the residual vector is a minimum value; correcting vector calculating means 7 which calculates a correcting vector; reverse-rotated image calculating means 8 which calculates a reverse-rotated image; adding means 9 which adds an output from the reverse-rotated image calculating means to a value calculated by the estimated image vector calculating means; means 10 which obtains an estimated value of the original image information from the minimum value of the residual vector square error when the square error value determining means 6 detects the minimum value of the residual vector square error; digital watermark information displaying means 11 which retrieves digital watermark information from the estimated image information of the original image information and which displays the retrieved digital watermark information; and central calculating means 12 which integrally controls each of the means listed above.

Image information as a subject of analysis in the digital watermark information detecting device according to the present invention is still image information.

First, description will cover an example showing how digital watermark information, which is the subject of the digital watermark information detecting method according to the present invention, can be deleted or deformed, with reference to Fig. 2.

Specifically, methods generally known for altering, deforming or deleting the digital watermark information embedded into the original image information include, as described earlier, execution of a deforming operation to the original image information. One of the known methods is two-dimensional affine transformation method as shown in Fig. 2.

The two-dimensional affine transformation method includes a translating type shown in Fig. 2(a), an enlarging/reducing type as shown in Fig. 2(b), and a rotating type as shown in Fig. 2(c). For the purpose of deleting, deforming or altering the digital watermark information, the two-dimensional affine transformation method of the enlarging/reducing type shown in Fig. 2(b) and the rotating type shown in Fig. 2(c) are primarily employed.

In the two-dimensional affine transformation, in which a two-dimensional image can be freely enlarged, reduced and rotated as shown in Fig. 2(a) and Fig. 2(b), coordinate values of each pixel can be expressed by the following Expression 1, with an optional point (x0, y0) being the center:

Expression 1
$$x = ((X - x_0)\cos\theta - (Y - y_0)\sin\theta)/a + x_0$$
$$y = ((X - x_0)\sin\theta + (Y - y_0)\cos\theta)/b + y_0$$

wherein X, Y and x, y respectively represent coordinate values of the location of each pixel before and after the affine transformation.

In the present invention, as has been described earlier, it is necessary to establish a method capable of countering the deletion or deformation of the digital watermark information performed by the rotating deforming operation which utilizes the rotating-type two-dimensional affine transformation method as shown in fig. 2(c). For this reason, description hereinafter will only cover the rotating deforming operation performed to the image information.

Specifically, when the image having the origin (0, 0) is rotated by an angles according to the affine transformation given by the Expression 1, location of each pixel after the rotation will be given by the following Expression 2:

$$\text{Expression 2} \qquad \begin{aligned} x &= X\cos\theta - Y\sin\theta \\ y &= X\sin\theta + Y\cos\theta \end{aligned}$$

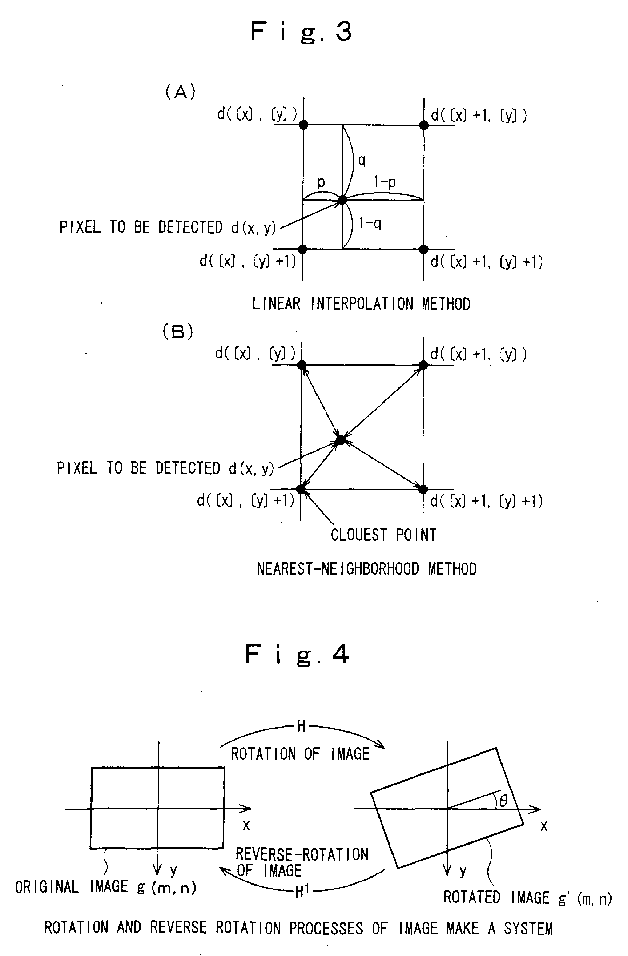

However, as shown in Fig. 3(A), the address (x, y) given by the Expressions 1 and 2 does not always coincide with the pixel (lattice point) of the input image.

In such a case as above, a method called the linear interpolation method is performed for improved quality of the image.

In the liner interpolation method, as shown in Fig. 3(A), if the given address is not equal to the lattice point, distance ratios from adjacent four lattice points are obtained, and the correction is made by using thickness values of these four pixels in proportion to the obtained ratios. Calculation for the thickness value is represented by the following Expression 3:

$$\text{Expression 3} \qquad \begin{aligned} \bar{d}(x,y) &= (1-q)\{(1-p)\cdot d([x],[y]) + p\cdot d([x]+1,[y])\} \\ &+ q\{(1-p)\cdot d([x],[y]+1) + p\cdot d([x]+1,[y]+1)\} \end{aligned}$$

wherein [X] and [Y] are integers not greater than x and y respectively.

Another known method of correction is nearest-neighborhood method.

In the nearest-neighborhood method, as shown in Fig. 3(B), the thickness at the nearest point is selected if the location of the pixel given by the Expressions (1) and (2) is not represent the lattice point of the input image.

In the nearest-neighborhood method, an unintended pixel which happens to be the next pixel can be picked up. For example, data representing a single line (single row) in the original image can be mistakenly corrected by data representing the next line (next row) after a rotation.

In the linear interpolation method, although image quality is better than is obtained by the nearest-neighborhood method(in which the thickness of the closest point is selected), intensity of the embedded watermark information can be decreased or averaged.

When the original image information is rotated, these phenomena will become the causes for the deletion, deformation or alteration of the digital watermark information inserted in the original image information, as has been described earlier.

If the rotated image is rotated again in the same direction, or further rotated in the other direction back into the previous angle, detection of the digital watermark information becomes more difficult.

Now, the problem of rotation and reverse rotation of the image as has been described above is, as shown in Fig. 4, a problem of a linear system.

H and Ht shown in Fig. 4 are respectively called the system matrix and the transposed matrix of the matrix.

If the size of the original image and the rotated image is represented by m x n = k, then the system matrix H is expressed as a matrix of k x k.

From this relationship, the image g' made by rotating the original image information g by a given rotating angle is expressed by the following Expression 4:

$$\text{Expression 4} \qquad g' = Hg$$

And, the Expression 4 can be transformed into the following Expression 5, through substitution by the Expression 2 and the Expression 3:

Expression 5

$$
\begin{bmatrix}
g'_{(0,0)} \\
g'_{(0,1)} \\
g'_{(0,2)} \\
g'_{(0,3)} \\
\vdots \\
g'_{(i,j)} \\
g'_{(i,j+1)} \\
g'_{(i,j+2)} \\
g'_{(i,j+3)} \\
\vdots \\
g'_{(m,n-4)} \\
g'_{(m,n-3)} \\
g'_{(m,n-2)} \\
g'_{(m,n-1)}
\end{bmatrix}
=
\begin{bmatrix}
h_{(0,0)} & h_{(0,1)} & \cdots & h_{(0,k-2)} & h_{(0,k-1)} \\
h_{(1,0)} & h_{(1,1)} & \cdots & h_{(1,k-2)} & h_{(0,k-1)} \\
h_{(2,0)} & h_{(2,1)} & \cdots & h_{(2,k-2)} & h_{(2,k-1)} \\
h_{(3,0)} & h_{(3,1)} & \cdots & h_{(3,k-2)} & h_{(3,k-1)} \\
& \ddots & & & \\
& & \ddots & & \\
& & & \ddots & \\
& & & & \ddots \\
& & & & \ddots \\
\vdots & \vdots & \vdots & \vdots & \vdots \\
h_{(k-4,0)} & h_{(k-4,1)} & \cdots & h_{(k-4,k-2)} & h_{(k-4,k-1)} \\
h_{(k-3,0)} & h_{(k-3,1)} & \cdots & h_{(k-3,k-2)} & h_{(k-3,k-1)} \\
h_{(k-2,0)} & h_{(k-2,1)} & \cdots & h_{(k-2,k-2)} & h_{(k-2,k-1)} \\
h_{(k-1,0)} & h_{(k-1,1)} & \cdots & h_{(k-1,k-2)} & h_{(k-1,k-1)}
\end{bmatrix}
\begin{bmatrix}
g_{(0,0)} \\
g_{(0,1)} \\
g_{(0,2)} \\
g_{(0,3)} \\
\vdots \\
g_{(i,j)} \\
g_{(i,j+1)} \\
g_{(i,j+2)} \\
g_{(i,j+3)} \\
\vdots \\
g_{(m,n-4)} \\
g_{(m,n-3)} \\
g_{(m,n-2)} \\
g_{(m,n-1)}
\end{bmatrix}
$$

wherein h(a, b), (0 ≦ a < k), (0 ≦ b < k) are elements of H, and their values are determined by g'(i', j')(i' · n+j'=a), g(i ,j)( i · n+j'=b) and the Expression (3). For example, the pixel g'(0, 0) of the rotated image can be expressed in the following Expression 6 if corresponding to the pixel g(i, j):

Expression 6

$$
\begin{aligned}
g'(0,0) &= \bar{g}([i],[j]) \\
&= (1-q)\{(1-p)\cdot g([i],[j]) + p\cdot g([i]+1,[j])\} \\
&\quad + q\{(1-p)\cdot g([i],[j]+1) + p\cdot g([i]+1,[j]+1)\}
\end{aligned}
$$

From the Expression 6, the elements of the first row of the H respectively take values given by the following Expression 7:

Expression 7   $h_{(0,j\cdot m+1)} = (1-q)(1-p);\ h_{(0,j\cdot m+i+1)} = (1-q)p;$

$$h_{(0,(j+1)m+1)} = q(1-p);$$

$$h_{(0,(j+1)m+i+1)} = qp;$$

$$h_{(a,b)} = 0;$$

$[if(a,b)\neq(0,j\cdot m+i),(0,j\cdot m+i+1),(0,j+1)m+i),(0,(j+1)m+i+1)]$

Next, consideration will be made to the problem that image information deformed by rotating original image at a certain angle is brought back to the original state by an inverse rotation. The problem can be understood as an inverse linear problem.

Specifically, the original image, i.e. the original image information g, can be estimated by using the system matrix H, from the image information g' which is the information after the rotation by the given angle.

This indicates that if image information is available and this image information is an image made by executing the above described rotating deforming operation to original image information which has a certain digital watermark information embedded, thereby having the digital watermark information altered or deleted, then the original image information can be estimated and at the same time the digital watermark information originally embedded can be retrieved by analyzing and finding solutions of the inverse linear problem.

Now, in estimating the original image information g from the image information g' which is believed to be made by rotating the original image, let the estimated original image information be represented by g". As a scale to measure probability of the estimation of the estimated image g", a square error value I represented by the Expression 8 can be used, which is the square error value between the product Hg" of the system matrix H and the estimated image g", and the illegally rotated image information g'.

$$\text{Expression 8} \qquad I = |g' - Hg''|^2$$

Therefore, solving the inverse linear problem means to estimate the estimated original image information g" which minimizes the square error I in the above Expression 8.

Generally, an affine inverse matrix is used as means for finding solutions of the least square error method in the Expression 8. The estimated image information g" is given by the following Expression 9:

Expression 9:

$$g'' = H^+ g'$$
$$= (H^T H)^{-1} H^T g'$$

Where, H+ = (HT · H)HT is called the system inverse matrix.

This method of using the affine inverse matrix is advantageous in that the answer can be obtained from a simple multiplication of the matrix. However, when the image to be processed is large, it is very difficult to obtain this inverse matrix. Therefore, in actual image processing, a numerical solution to be described below is often used.

Therefore, the numerical solution as another method for finding the solution from the least square error method represented by the Expression 8, that is, the estimated image information vector g" of the original image information includes method of steepest descent, conjugate gradient method, and so on. Among other however, it is desirable to use a Jacobian method.

For this reason, hereinafter, description will be made for another technique which uses the Jacobian method for obtaining solution to the least square error method in the Expression 8.

The Jacobian method has the following basic algorithm:

(1) Give an optional initial estimated image information vector g"0.
(2) Using the given optional initial estimated image information vector g"0, find a rotated image vector Hg"0 of the image from the Expression 4.
(3) Obtain a residual vector g'-Hg"0 given by a subtraction from the obtained rotated image information g'.
(4) Obtain an estimated vector from the residual vector (g'-Hg"0) and HT.
(5) Find a new corrected vector by adding the estimated vector and the corrected vector.
(6) Repeat the above steps (2) through (6) using the newly estimated vector.

In the above described method, called consecutive method, often, the calculation is ceased depending on the size of the residual vector found in the step (3). If the k-th calculation is represented by a suffix k, then the Jacobian method can be represented by the following Expression 10:

$$\text{Expression 10} \qquad g''_{k+1,} = g''_k + \alpha H^T (g' - Hg''_k)$$

wherein $\alpha$ is called the damping coefficient, and determines convergence and converging speed of the consecutive method. The value of $\alpha$ is often determined by experience. The solution found by sufficient convergence by infinite number of repetitions in the Jacobian method satisfies the following Expression 11:

$$\text{Expression 11} \qquad g''_\infty = g''_\infty + \alpha H^T (g' - Hg''_\infty)$$

Because the Expression 11 is satisfied, it is clear that the following Expression 12 is satisfied:

Expression 12     $g' = Hg''_\infty$

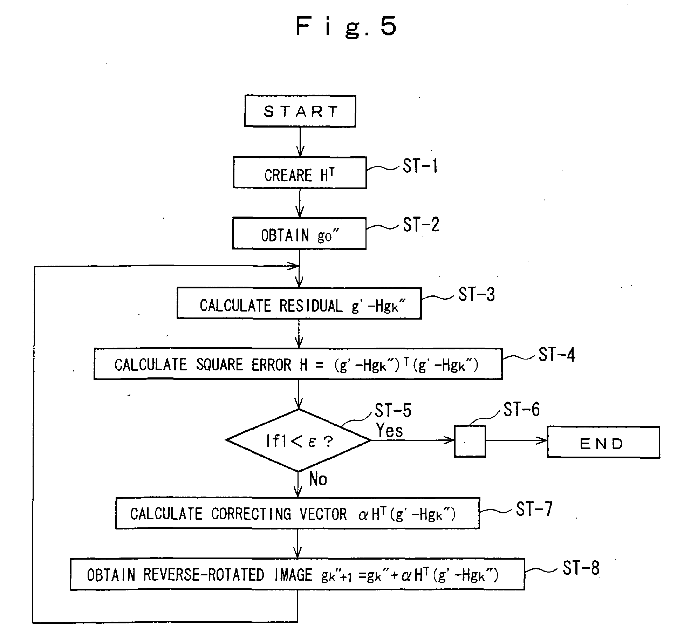

Now, having described technological philosophy about the digital watermark information detecting method according to the present invention, hereinafter, a digital watermark information detecting method as an embodiment of the above will be described in detail with reference to a flowchart shown in Fig. 5.

First, subject image information presumed to have been tampered and therefore is subjected to the digital watermark information detecting method according to the present invention is a still image and this image information preferably is image information presumed to have been made by a rotating deforming operation.

Further, preferably, source information from another piece of image information, which is practically identical with or similar to the subject image information, is available.

In other words, in the digital watermark information detecting method according to the present invention, in order to retrieve the digital watermark information embedded in the original image information, from image information which has its digital watermark information already deleted, altered or deformed by tampering, it is preferable that image information identical with or similar to the original image information from a known source is available.

Further, in the digital watermark information detecting method according to the present invention, when the subject image information is analyzed, it is preferable that there is provided image information analyzing means 1 capable of identifying if the subject image information is an enlarged/reduced image information or a rotated image information.

Specifically, as a means for identifying if a still image obtained from the market is a rotated image or an enlarged/reduced image, there is an "image edge detecting method" for example. By using this method described here below, it becomes possible to determine if the still image available from the market is a rotated or enlarged/reduced image.

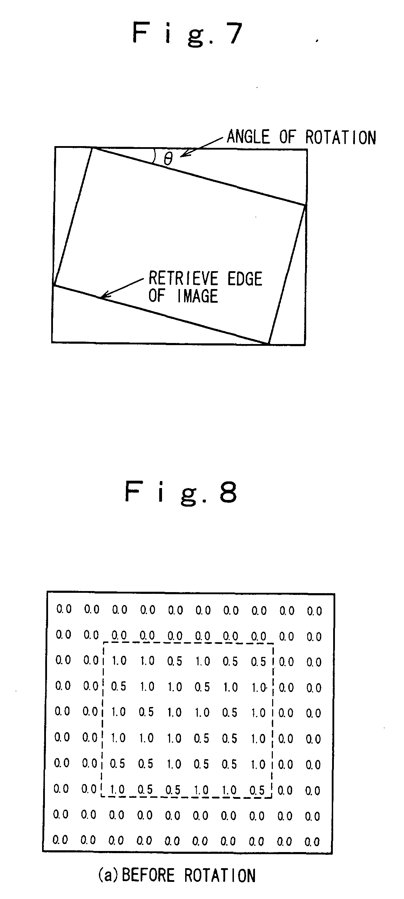

That is, in the image edge detecting method, as shown in Fig. 7, the angle of rotation of the image can be calculated by extracting an edge of the image by using a differential filter.

On the other hand, when the edge cannot be detected by means of the image edge detecting method, the still image obtained from the market may be assumed to be an enlarged/reduced image.

Further, determination whether or not the still image is an enlarged/reduced image can be made by a method proposed in another patent application applied by the applicant of the present invention: In this method, the obtained image is Fourier transformed into a Fourier-space image, into which a predetermined reference information signal is embedded at a predetermined location. Then the Fourier-space image is reverse-Fourier-transformed back into an image-space image. Next, a plurality of enlarging/reducing rates are selected form a predetermined range of enlarging/reducing rate, and the image-space image is enlarged/reduced by using each of the selected rates to obtain individual image of the selected sizes in the image-space. Then, each of the image-space images having different sizes of the image is Fourier transformed again into a Fourier-space image, and then in each of the Fourier-space image, the reference signal information embedded into the image is detected to see if a frequency component of the reference signal information has been shifted or not.

According to the present invention, as has been described earlier, the subject image information obtained is an image which is already rotated and its digital watermark information can no longer be readily legible: To this image information, first the estimated image information vector g"0 (initial estimated image value) is set. Then, the estimated value is changed consecutively so as to minimize the square error value as given by the Expression 8, which is an expression of the error value between the subject image information vector g' and Hg"0 which represents the scale to measure the probability of the estimation given by the product of the estimated image value and the system matrix H. In such a way, by estimating the original image information from the subject image information, the digital watermark information is made legible.

Preferably, the square error value determining means 6 used in the present invention is means which calculates the least square error value by using the affine inverse matrix or the numerical solution by means of the Jacobian method.

Referring now to the flowchart shown in Fig. 5, a basic steps of operation in the digital watermark information detecting method according to the present invention is as follows:

Specifically, commencing the routine at the Start, Step (ST-1) is performed to find the matrix H from the subject image information obtained, and the transposed matrix HT is prepared.

Here below, an example of how the vector H and its transposed matrix HT are prepared in the present case according to the present invention.

Specifically, it is assumed that there is a rotated still image as shown in Fig. 7.

The size of the image is 4 x 4 pixels, and an angle of the rotation detected by the image edge detecting method is 15 degrees.

From the conditions given above, the size of the vector H and its transposed matrix HT are 16 x 16 pixels.

Values of each element h(i, j) of the vector H given by the Expression 2 and 3 are listed in Table 1 to the second decimal place.

The element h(i, j) represents connection between the pixel i (0 < i < 4 x 4) of the image after the rotation and the image j (0 < j < 4 x 4) of the image before the rotation.

As shown in Table 1, if all the elements h(i, j) take the value zero for the pixel i, this particular pixel does not have any relationship with any of the pixels of the image before the rotation.

In other words, this particular pixel is connected with another pixel which is not in the size of the image before the rotation. If the sum for the pixel i is not zero, then as shown in Expression 13:

Expression 13

$$h_{(i,j)} + h_{(i,j+1)} + h_{(i,m)} + h_{(i,m+1)}$$
$$= (1-q)(1-p) + q(1-p) + (1-q)p + qp$$
$$= 1$$

On the other hand, the transposed matrix HT of the vector H can be obtained by exchanging the row and the column of the vector H.

Table 1

| Matrix H (16 x 16) | | | | | | | | | | | | | | | |
|---|---|---|---|---|---|---|---|---|---|---|---|---|---|---|---|
| 0 | 0 | 0 | 0 | 0 | 0 | 0 | 0 | 0 | 0 | 0 | 0 | 0 | 0 | 0 | 0 |
| 0.33 | 0.35 | 0 | 0 | 0.16 | 0.17 | 0 | 0 | 0 | 0 | 0 | 0 | 0 | 0 | 0 | 0 |
| 0 | 0.48 | 0.45 | 0 | 0 | 0.04 | 0.03 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0.16 | 0.55 | 0 | 0 | 0.07 | 0.23 | 0 | 0 | 0 | 0 | 0 | 0 |
| 0 | 0 | 0 | 0 | 0 | 0.25 | 0.72 | 0 | 0 | 0.01 | 0.03 | 0 | 0 | 0 | 0 | 0 |
| 0 | 0 | 0.07 | 0 | 0.16 | 0 | 0 | 0.23 | 0.55 | 0 | 0 | 0 | 0 | 0 | 0 | 0 |
| 0 | 0 | 0 | 0 | 0 | 0 | 0 | 0 | 0.45 | 0.03 | 0 | 0 | 0.48 | 0.04 | 0 | 0 |
| 0 | 0 | 0 | 0 | 0 | 0 | 0 | 0 | 0 | 0.72 | 0.03 | 0 | 0 | 0.25 | 0.01 | 0 |
| 0 | 0 | 0 | 0 | 0 | 0 | 0 | 0 | 0 | 0 | 1 | 0 | 0 | 0 | 0 | 0 |
| 0 | 0 | 0 | 0 | 0 | 0 | 0.01 | 0.25 | 0 | 0 | 0.03 | 0.72 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0.03 | 0.01 | 0 | 0 | 0.72 | 0.25 |
| 0 | 0 | 0 | 0 | 0 | 0 | 0 | 0 | 0 | 0 | 0 | 0 | 0 | 0 | 0 | 0 |

Table 2

| Matrix $H^T$ (16 x 16) | | | | | | | | | | | | | | | |
|---|---|---|---|---|---|---|---|---|---|---|---|---|---|---|---|
| 0 | 0.33 | 0 | 0 | 0 | 0 | 0 | 0 | 0 | 0 | 0 | 0 | 0 | 0 | 0 | 0 |
| 0 | 0.35 | 0.48 | 0 | 0 | 0 | 0 | 0 | 0 | 0 | 0 | 0 | 0 | 0 | 0 | 0 |
| 0 | 0 | 0.45 | 0 | 0 | 0 | 0 | 0.07 | 0 | 0 | 0 | 0 | 0 | 0 | 0 | 0 |
| 0 | 0 | 0 | 0 | 0 | 0 | 0 | 0.16 | 0 | 0 | 0 | 0 | 0 | 0 | 0 | 0 |
| 0 | 0.16 | 0 | 0 | 0 | 0.16 | 0 | 0 | 0 | 0 | 0 | 0 | 0 | 0 | 0 | 0 |
| 0 | 0.17 | 0.04 | 0 | 0 | 0.55 | 0.25 | 0 | 0 | 0 | 0 | 0 | 0 | 0 | 0 | 0 |
| 0 | 0 | 0.03 | 0 | 0 | 0 | 0.72 | 0.23 | 0 | 0 | 0 | 0.01 | 0 | 0 | 0 | 0 |
| 0 | 0 | 0 | 0 | 0 | 0 | 0 | 0.55 | 0 | 0 | 0 | 0.25 | 0 | 0 | 0 | 0 |
| 0 | 0 | 0 | 0 | 0 | 0.07 | 0 | 0 | 0.45 | 0 | 0 | 0 | 0 | 0 | 0 | 0 |
| 0 | 0 | 0 | 0 | 0 | 0.23 | 0.01 | 0 | 0.03 | 0.72 | 0 | 0 | 0 | 0 | 0 | 0 |
| 0 | 0 | 0 | 0 | 0 | 0 | 0.03 | 0 | 0 | 0.03 | 1 | 0.03 | 0 | 0 | 0.03 | 0 |
| 0 | 0 | 0 | 0 | 0 | 0 | 0 | 0 | 0 | 0 | 0 | 0.72 | 0 | 0 | 0.01 | 0 |
| 0 | 0 | 0 | 0 | 0 | 0 | 0 | 0 | 0.48 | 0 | 0 | 0 | 0 | 0 | 0 | 0 |
| 0 | 0 | 0 | 0 | 0 | 0 | 0 | 0 | 0.04 | 0.25 | 0 | 0 | 0 | 0 | 0 | 0 |
| 0 | 0 | 0 | 0 | 0 | 0 | 0 | 0 | 0 | 0.01 | 0 | 0 | 0 | 0 | 0.72 | 0 |
| 0 | 0 | 0 | 0 | 0 | 0 | 0 | 0 | 0 | 0 | 0 | 0 | 0 | 0 | 0.25 | 0 |

Next, in Step(ST-2) the original image information vector is estimated from the subject image information vector g'. In this process, a first estimated image information g"0 (initial estimated image value) is obtained, and then Step (ST-3) is performed, in which the residual (g' - Hg"k) is calculated as an error between the subject image information vector g' and the above Hg"0.

It should be noted here that the estimated image information g"0 (initial estimated image value) will be given a new value, as will be described later, every time the operation is repeated, and for this reason, generally, the estimated image information vector value is expressed as g"k.

Now, as a specific means for obtaining the initial estimated image value, it is possible to use a reverse-rotated image obtained by the linear interpolation method of the affine transforming method (or nearest-neighborhood method) as the initial estimated image value. The reverse-rotated image can be obtained for example, by changing the sign of the angle of rotation calculated in the above described method and putting this value in the Expression 2.

Thereafter, Step (ST-4) is executed, in which the square error I = (g' - Hg"k)T(g' - Hg"k) of the residual obtained in Step (ST-3) is calculated.

Thereafter, Step (ST-5) is executed to determine whether or not the square error I represents the minimum value. If Step (ST-5) determines that the square error I is the minimum value, then Step (ST-6) is executed to estimate the original image information vector g. From a resulted estimation, the digital watermark information is retrieved by using an appropriate digital watermark information means 10, and is displayed in an appropriate displaying means 11, which brings the routine to an END.

On the other hand, if the Step (ST-5) determines that the square error I does not represent the minimum value, then Step (ST-7) is executed to calculate the correcting vector α HT(g' - Hg"k), and then Step (ST-8) is executed to obtain the reverse-rotated image vector expressed by g"k+1 = g"k+α HT(g'-Hg"k).

Thereafter, the process goes back to Step (ST-3), in which the reverse-rotated image vector g"k+1 is added to the residual value (g' - Hg"k), and then each of the steps following the Step (ST-3) is repeated.

As is clear from the description of the above example, as a more specific embodiment of the digital watermark information detecting method according to the present invention, there is provided a digital watermark information detecting method comprising: a first step of obtaining image information; a second step of determining whether or not the obtained image information obtained has been rotated or not; a third step of calculating an estimated initial image vector from the image information which is found to have been rotated; a fourth step of calculating an estimated initial image vector from the image information; a fifth step of calculating a residual vector between the image vector in the image information and a value obtained by multiplying the estimated initial image vector with the matrix; a sixth step of calculating a square error of the residual vector; a seventh step of determining whether or not the residual vector square error value is a minimum value; an eighth step of calculating a reverse-rotated image when the residual vector square error is determined not to have the minimum value; a ninth step of adding the calculated reverse-rotated image to the value given by the estimated initial image vector calculating means; a tenth step of repeating the step of calculating the residual vector square error value if need be; an eleventh step of estimating the original image information from the residual vector square error value if the square error value is determined to be the minimum value; and a twelfth step of retrieving the digital watermark information from the estimated original image information.

Preferably, in the digital watermark information detecting method according to the present invention, the square error value determining means 6 is a means which calculates the least square error value by using the affine inverse matrix or the numerical solution by means of the Jacobian method.

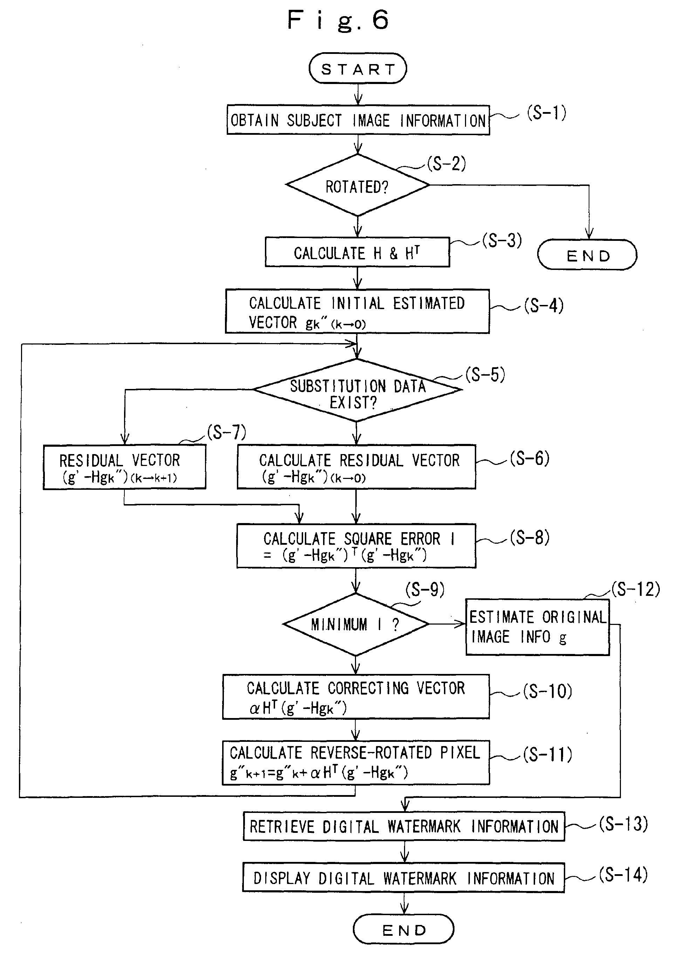

The more specific embodiment of the digital watermark information detecting method according to the present invention will now be described in more detail, with reference to a flowchart shown in Fig. 6

Specifically, in the digital watermark information detecting method according to the present invention, when the routine is started, Step (S-1) is executed to perform the first step of obtaining a subject image information, and then Step (S-2) to determine whether or not the image information obtained has been rotated.

If the Step (S-2) determines that the obtained subject image information has not been rotated or has been deformed only by an enlarging/reducing deforming operation, then this routine will come to an end. However, if it is determined that the subject image information has been subjected to a rotating deforming operation, then the routine goes to Step (S-3) to execute the third step of calculating the matrix H and the transposed matrix HT about the system matrix from the image information which is found to have been rotated, and then in Step (S-4), the fourth step is executed to calculate the estimated initial image vector g"0 from the subject image information g'.

Thereafter, in Step (S-5), determination is made if there is substitution data based on the reverse-rotated image information vector g"k+1 to be described later. If the answer is no, then Step (S-6) is executed to carry out the fifth step of calculating the residual vector (g' - Hg"k) between the image vector g' in the image information and a value Hg"0 obtained by multiplying the estimated initial image vector g"0 with the matrix H.

If the answer given by the Step (S-5) is YES, then Step (S-7) is executed to carry out a 5'-th step of calculating a residual vector (g' -Hg" k+1) by using the substituted image information vector g"k+1.

Next, the routine goes to Step (S-8), where the sixth step is executed to calculate the square error I = (g' - Hg"k)T(g' - Hg"k) of the residual vector (g' -Hg"k), and then in Step (S-9), the seventh step is carried out to determine whether or not the residual vector square error value I is the minimum value.

If the Step (S-9) determines that the residual vector square error value I is not the minimum value, then routine goes to Step (S-10) to execute the eighth step of calculating the correcting vector represented by $\alpha$ HT(g' - Hg"k), and then in Step (S-11), the ninth step is executed to calculate the reverse-rotated image vector represented by g"k+1 = g"k + $\alpha$ HT(g' - Hg"k). Then, the routine goes back to Step (S-5), the tenth step is executed, in which the previous estimated image information vector value g"0 or g"k is substituted by the newly calculated reverse-rotated image information vector g"k+1.

Thereafter, the eleventh step is executed, in which steps from (S-4) through (S-11) are repeated depending on the need until the Step (S-7) determines the current square error value I is the minimum, at which point the routine goes to Step (S-12), where the twelfth step is executed to estimate the original image information g from the minimum square error value I. Then, in Step (S-13), the thirteenth step is executed to retrieve the digital watermark information from the estimated original image information g, and finally, in Step (S-14), the step of displaying the digital watermark information on specified displaying means is executed, bringing the routine to an end.

Preferably, the repeat of the steps (S-5) through (S-11) is finished within five times for example, although there is no specific limitation to the number of repeats.

Now, in order to describe the digital watermark information detecting method in more specific details, simple model of image information will be used and steps for carrying out the digital watermark information detecting method will be detailed hereinafter.

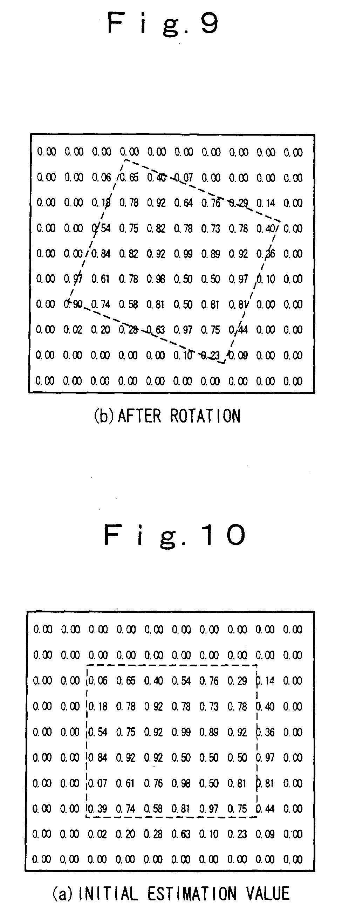

Specifically, an original still image as shown in Fig. 8, which has not been rotated, is used as the model. Assumptions are further made that the image is rotated by an angle of 15 degrees as shown in Fig. 9, with a resulting size of the rotated image being 10 x 10 pixels.

Grayed areas of the images shown in Fig. 8 and Fig. 9, are areas in which image values exist corresponding to non-zero values.

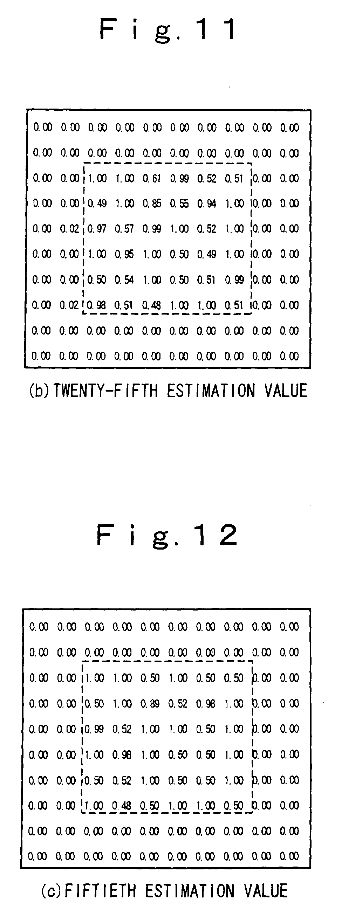

For the above model of the still image, estimation was repeated, with an weight coefficient $\alpha$ in the Expression 10 set to 1.0. Results of the zero-th estimation (the initial value), 25-th, 50-th and 100-th estimations are shown respectively in Figs. 10 through 13.

Specifically, the square error I2 between the image g" and the original image g, and the square error I1 between the originally rotated image g' and the secondly-rotated image g' " = Hg" resulted from the re-rotation at the same angle in each of the sessions shown in Fig. 10 through Fig. 13 are respectively given by Expression 14 and Expression 15.

Expression 14

$$I_1 = \left| \mathbf{g}' - \mathbf{H}\ddot{\mathbf{g}}'' \right|^2 = \left| \mathbf{g}' - \mathbf{g}''' \right|^2 = \frac{1}{(M-1)} \sum_{i=1}^{M} \left( g_i' - g_i'' \right)^2$$

Expression 15

$$I_2 = \left| \mathbf{g} - \mathbf{g}'' \right|^2 = \frac{1}{(M-1)} \sum_{i=1}^{M} \left( g_i - \dot{g}_i'' \right)^2$$

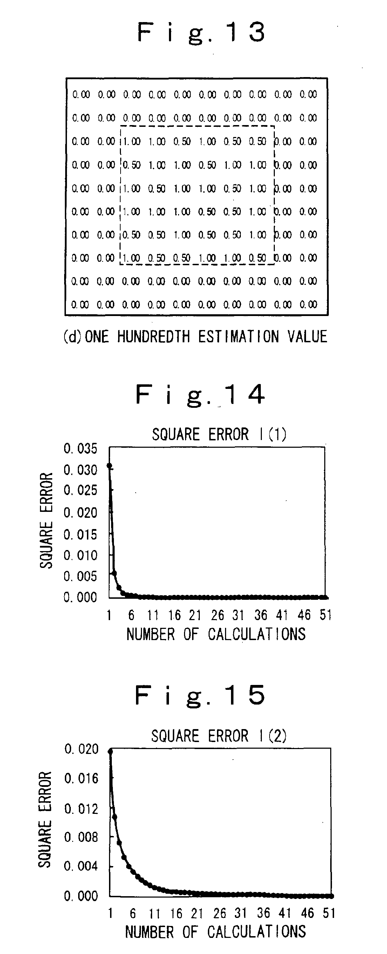

wherein M represents the size of the image. Results obtained by the Expression 14 and the Expression 15 are shown in Fig. 14, Fig. 15 and Table 3.

From the results shown in Fig. 14, Fig. 15 and Table 3, it is learned that the square error between the estimated image value and the original image value becomes almost zero after about 25 times of estimation.

Another aspect of the present invention provides a recording medium storing a program for executing a digital watermark information detecting method, the method comprising: a first step of obtaining image information; a second step of determining whether or not the obtained image information obtained has been rotated or not; a third step of calculating a matrix and a transposed matrix about system matrix; a fourth step of calculating an estimated initial image vector from the image information; a fifth step of calculating a residual vector between the image vector in the image information and a value obtained by multiplying the estimated initial image vector with the matrix; a sixth step of calculating a square error of the residual vector; a seventh step of determining whether or not the residual vector square error value is a minimum value; an eighth step of calculating a reverse-rotated image if the residual vector square error is determined not to have the minimum value; a ninth step of calculating a reverse-rotated image from the correcting vector; a tenth step of substituting the estimated image vector value with the calculated reverse-rotated image information; an eleventh step of repeating the step of calculating the residual vector square error value as necessary; a twelfth step of estimating the original image information from the minimum square error value if the residual square error value is determined to be the minimum value; and a step of retrieving the digital watermark information from the estimated original image information.

Table 3

| Number of estimations | $I_1$ | $I_2$ |
|---|---|---|
| 0 | 0.030703 | 0.019519 |
| 25 | 0.000013 | 0.000214 |
| 50 | 0.000001 | 0.000021 |
| 100 | 0.000000 | 0.000001 |

Next, an embodiment of the above aspect of the present invention will be described in detail.

Specifically, description will cover, with reference to the accompanying drawings: an original image deforming-method detecting device 300 which carries out the original image deforming-method detecting method according to the present invention: an original-image-size detecting device 100 which carries out the method for detecting the size of the original image; and a digital-watermark detecting device 200 which carries out the digital-watermark detecting method.

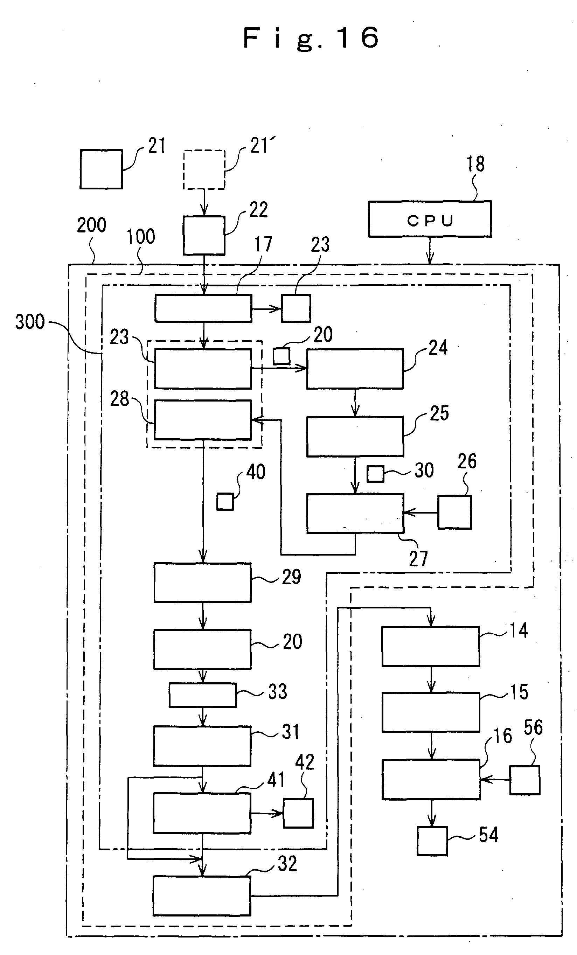

First, Fig. 16 is a block diagram showing a constitution of the original image deforming-method detecting device 300 which carries out the original image deforming-method detecting method according to the present invention. The figure shows the original image deforming-method detecting device 300 comprising: first Fourier transforming means 3 which Fourier transforms an obtained image 22 into a first Fourier-space image 20; reference information signal embedding means 24 which embeds a predetermined reference information signal S at a predetermined location P of the Fourier-space image 20 which is prepared by Fourier transforming the obtained image; reverse Fourier transforming means 25 which reverse-Fourier-transforms the Fourier-space image 20 provided with the reference information signal S into an image-space image 30; enlarging/reducing rate storing means 26 which stores a plurality of enlarging/reducing rates D (D1, D2, D3,...Dn) for changing the size of the image-space image 30; image- size changing means 27 which sequentially selects desired enlarging/reducing rates D (D1, D2, D3,...Dn) from the enlarging/reducing rate storing means 26, and sequentially and individually changes the image size of the image-space image 30 by individually using each of the selected enlarging/reducing rates D1, D2, D3,...Dn; second Fourier transforming means 28 which Fourier transforms each of the differently-sized image-space images 30 into second Fourier-space images 40; frequency component value detecting means 29 which detects a frequency component of the reference information signal S from each of the second Fourier-space images 40; frequency component value arraying means 20 which arrays a plurality of frequency components obtained from each of the second Fourier-space images 40 into a predetermined sequence according to the enlarging/reducing rates D (DI, D2, D3,...Dn); outstanding frequency component value determining means 31 which determines whether or not there is a frequency component value outstanding from surrounding frequency component values; and original-image enlarging/reducing-operation identifying means 41 which determines, on the basis of an output value outputted from the outstanding frequency component determining means 31, that the subject image is a result of an enlarging/reducing deforming operation performed to the original image.

Therefore, needless to say, according to the present embodiment, there is a case in which the obtained subject still image 22 obtained is determined not to have been rotated nor enlarged/reduced.

Preferably, the original image deforming-method detecting device 300 according to the present invention is provided with noise removing means 33 which removes a predetermined noise, i.e. a background value, from the output data from the frequency component value arraying means 20 when the output from the frequency component value arraying means 20 is searched by the outstanding frequency component value determining means 31 for an outstanding frequency component value.

Further, preferably, the original image deforming-method detecting device 300, which has to start operation without any information about the kind of deforming operation performed to the obtained still image 21, is provided for example, with simple detecting means such as rotating deforming operation detecting means 17 for determining whether or not the obtained still image 22 has been rotated.

There are already several publicly known specific methods for determining whether or not the subject image obtained has been rotated or otherwise deformed. As an easier method of these, the "image edge detecting method" which will be described here below can be used conveniently as a method of detecting if a still image obtained from the market is a rotated image of not.

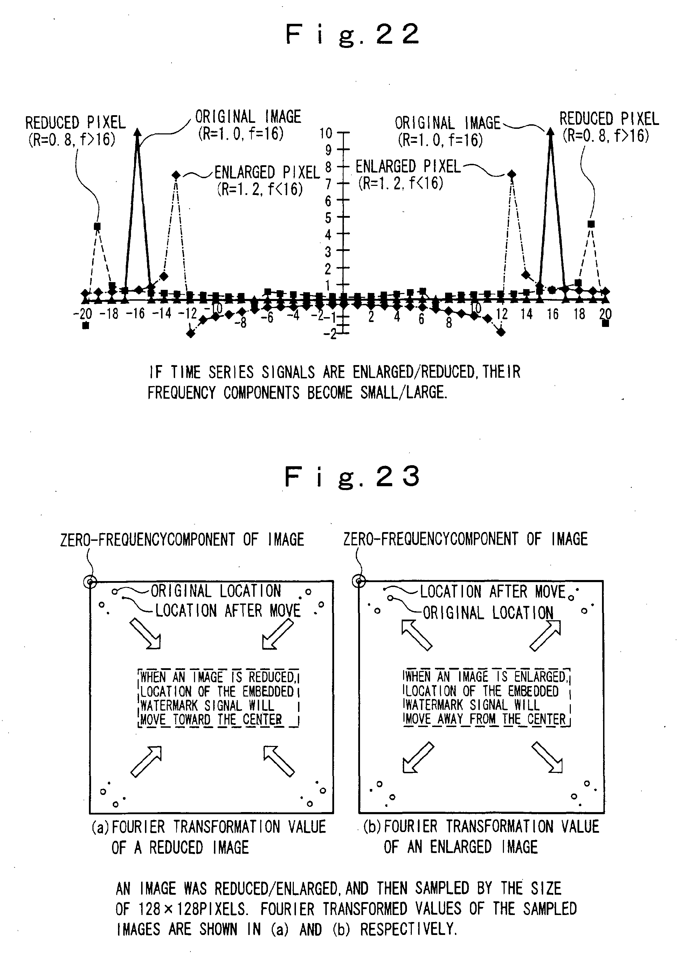

Specifically, according to the image edge detecting method, as shown in Fig. 22, an angle of rotation of the image can be calculated, by using a differential filter to find out an edge of the image.

On the other hand, if the edge cannot be found by the above image edge detecting method, the still image obtained from the market can be presumed to have been subjected to the enlarging/reducing deforming operation or another deforming operation.

Therefore, according to the present embodiment, the still image 22 obtained is first checked by the rotating deforming operation detecting means 17. If the image is found to be a rotated image, then the result of the check can be displayed in a displaying means 23, and the rest of the process can be cancelled. If the rotating deforming operation detecting means 17 determines that the obtained still image 22 has not been rotated but has been otherwise deformed by methods including the enlarging/reducing deforming operation, then the series of means starting from the first Fourier transforming means 3 will be carried out in order to find if the obtained still image 22 has been enlarged/reduced.

On the other hand, according to the present invention, the first and the second Fourier transforming means 23, 28 may be provided individually or provided as a single means commonly used for both functions.

Further, in the original image deforming-method detecting device 300 according to the present embodiment, it is possible to display the determination made by the original-image enlarging/reducing deforming operation identifying means 41 in an appropriate displaying means 42.

It should be noted here that a component indicated by reference numeral 18 in Fig. 16 is a central processing unit (CPU) which integrally controls each of the means constituting the original image deforming-method detecting device 300 according to the present invention as well as two other devices to be described hereafter, i.e. the original-image-size detecting device 100 and the digital-watermark detecting device 200.

Next, constitution of the original-image-size detecting device 100 and the digital-watermark detecting device 200 according to the present invention will be described with reference to Fig. 16.

Fig. 16 is a block diagram showing a constitution of an embodiment of the devices 100 and 200 for carrying out the original image size detecting method and the digital-watermark detecting method according to the present invention. The figure shows the device 100 which detects the size of the original image from the obtained image 22. The device comprises: first Fourier transforming means 23 which Fourier transforms an obtained image 22 into a first Fourier-space image 20; reference information signal embedding means 24 which embeds a predetermined reference information signal S at a predetermined location P of the Fourier-space image 20 which is prepared by Fourier transforming the obtained image; reverse Fourier transforming means 25 which reverse-Fourier-transforms the Fourier-space image 20 provided with the reference information signal S into an image-space image 30; enlarging/reducing rate storing means 26 which stores a plurality of enlarging/reducing rates D (D1, D2, D3,...Dn) for changing the size of the image-space image 30; image-size changing means 27 which sequentially selects desired enlarging/reducing rates D (D1, D2, D3,...Dn) from the enlarging/reducing rate storing means 26, and sequentially and individually change the image size of the image-space image 30 by individually using each of the selected enlarging/reducing rates D1, D2, D3,. ..Dn; second Fourier transforming means 28 which Fourier transforms each of the differently-sized image-space images 30 into second Fourier-space images 40; frequency component value detecting means 29 which detects a frequency component of the reference information signal S from each of the second Fourier-space images 40; frequency component value arraying means 20 which arrays a plurality of frequency components obtained from each of the second Fourier-space images 40 into a predetermined sequence according to the enlarging/reducing rates D (D1, D2, D3,...Dn); outstanding frequency component value determining means 31 which determines whether or not there is a frequency component value outstanding from surrounding frequency component values; and original-image size identifying means 32 which determines, if the outstanding frequency component is found, that the enlarging/reducing rate Dn which corresponds to the outstanding frequency component value is the enlarging/reducing rate D which was used for making the obtained image 22 by changing the size of the original image 2.

Preferably, the original-image-size detecting device 100 according to the present invention is provided with noise removing means 33 which removes a predetermined noise, i.e. a background value, from the output data from the frequency component value arraying means 20 when the output from the frequency component value arraying means 20 is searched by the outstanding frequency component value determining means 31 for an outstanding frequency component value.

On the other hand, the digital-watermark detecting device 200 according to the present invention comprises all of the constitution of the original-image-size detecting device 100 shown in Fig. 1, and further comprises: original image reproducing means 14 which reproduces an estimated original image 21' by applying to the obtained image 22 a reciprocal number 1/D of the enlarging/reducing rate Dn which is the rate selected by the original-image size identifying means 32 as the rate believed to have been used in the enlarging/reducing deforming operation performed to the original image 21 in order to make the input image 22; and digital watermark information detecting means 15 which detects presence or absence of the digital watermark information in the estimated original image 21' reproduced by the original image reproducing means 14.

Further, preferably, the original-image-size detecting device 100 and the digital-watermark detecting device 200 according to the present invention are provided with subject-image deforming-operation detecting means 17 which determines whether or not the obtained still image 22 is made by an enlarging operation or a reducing operation.

On the other hand, according to the present invention, the first and the second Fourier transforming means 23, 28 may be provided individually or provided as a single means commonly used for both functions.

Further, preferably, in the original-image-size detecting device 100 and the digital-watermark detecting device 200 according to the present invention, there is provided a digital watermark information coincident retrieving means 16 which determines, when the digital watermark information detecting means 15 has retrieved a digital watermark from the estimated original image 21', if the digital watermark found in the reproduced original image 21' is identical with or similar to information stored in original-image digital-watermark storing means 20 which stores the digital watermark information peculiar to the standard original image 21. Further, preferably, there is provided displaying means 24 which displays a result of the retrieve performed by the digital watermark information coincident retrieving means 16.

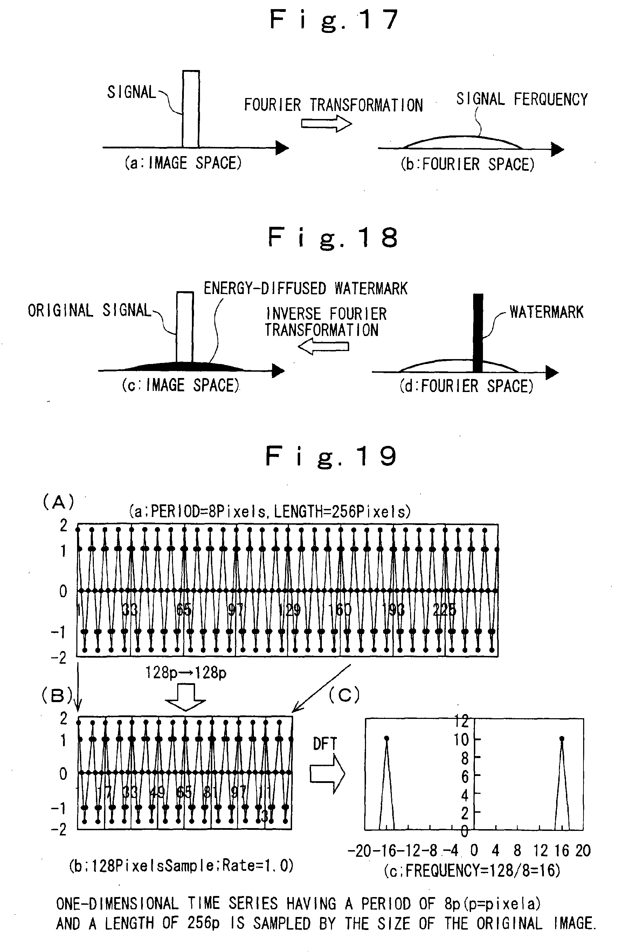

Now, a basic operating principle of the original image size detecting method and the digital-watermark detecting method according to the present invention will be described in detail with reference to Fig. 17 through Fig. 24.

First, conventional method of embedding a digital watermark into a desired original image can be classified roughly into two kinds, one kind being embedment into the image space while the other kind being embedment into the Fourier space.

Specifically, according to the image space technique, the digital watermark information is embedded directly into image values. On the other hand, according to the Fourier space technique, the image values are Fourier transformed, and the digital watermark information is embedded into the Fourier values of the image.

Each of the methods has its own advantages.

For example, if digital watermark information A having a predetermined frequency value is embedded into the image-space image 22 or 30 as shown in Fig. 17(A), and if this image-space image if Fourier transformed into the Fourier-space image 20, the frequency of the embedded digital watermark information A is diffused generally uniformly into the Fourier space as shown in Fig. 17(B), becoming unrecognizable as the digital watermark information.

On the other hand, if the Fourier-space image 20 which has digital watermark information B embedded within is reverse-Fourier-transformed into the image-space image 30 as shown in Fig. 18 (B), energy (frequency component values) of the digital watermark information B is diffused into the entire image-space as shown in Fig. 18(A), with less deterioration in the quality of the original image.

On the other hand, as has been described above, digital watermark information embedded in the Fourier-space image 20 has the following characteristics:

First, consideration is made for one-dimensional signal, taking an example shown in Fig. 19(A), in which the one-dimensional signal is expressed as one-dimensional time series having a period of 8P (P: pixel) and a length of 256P. If a 128-point sample having the enlarging/reducing rate of 1.0 (i.e. a series which is not enlarged nor reduced) is Fourier transformed as shown in Fig. 19(B), a resulting frequency is given by 128P/8T = 16 as shown in Fig. 19(C).

Specifically, Fig. 19(C) shows the state of the frequency component of the sample taken, without changing the size of image, from the one-dimensional time series having the period of 8P (P: pixel) and the length of 256P.

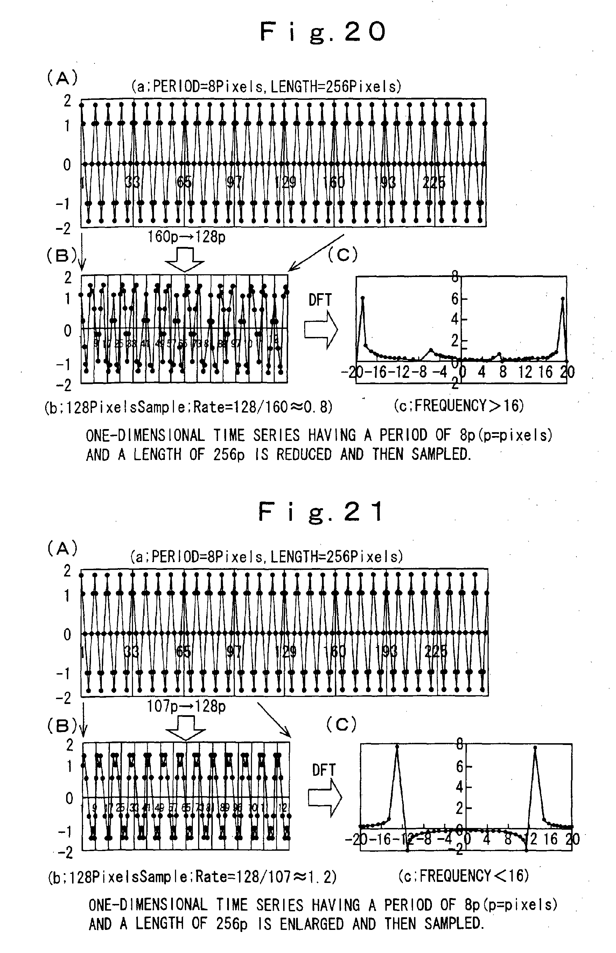

Next, Fig. 20(A) through Fig. 20(C) show a result of 128-pixel sampling from a similar one-dimensional series after the series is reduced at a rate of 0.8. Fig. 20(B) shows the waveform of the sample.

Further, if this series is Fourier transformed, it is learned that the frequency of the series becomes greater than 16 as shown in Fig. 20(C).

Further, Fig. 20(A) shows a result of 128-pixel sample taken from the similar one-dimensional series after the series is enlarged at a rate of 1.2. Fig. 20(B) shows the waveform of the sample.

Further, if this series is Fourier transformed, it is learned that the frequency of the series becomes smaller than 16 as shown in Fig. 20(C).

As is clear from the above results, if a signal having a certain frequency is enlarged/reduced at a predetermined enlarging/reducing rate and then re-sampled, then, as shown in Fig. 22, the frequency of the signal becomes greater or smaller than the original frequency.

It should be appreciated to note here that the unit of measurement of the vertical axis in Fig. 22 is the intensity of the frequency component.

Specifically, it is learned that the location of the watermark signal embedded in the Fourier space will shift after the enlarging/reducing deforming operation.

Next, consideration is made to a case of two-dimensional image, in which the digital watermark information is embedded into the Fourier-space image prepared by Fourier transforming the image. A two-dimensional images as shown in Fig. 23(A) and Fig. 23(B) will be used as a model.

The images shown in Fig. 23(A) and Fig. 23(B) respectively had a size of 256 x 256p, being a gray-colored image of the image value of 128. This image was divided into four pieces of block image each having the size of 128p x 128p. Each of the block images were Fourier transformed, and then a total of eight predetermined reference information signals S each having, for example, a height of 20 (8-bit image) and a thickness of 1 pixel, were disposed at each of the predetermined locations P in each of the blocks in the Fourier transformed image.

It should be noted here that a gray symbol placed in an upper left corner portion of the images represents a zero-frequency component of the original image in Fig. 23.

Thereafter, each of the four block-images carrying the reference information signals S embedded within was reverse-Fourier-transformed back into an image-space image. Then, from this image-space image, each of the 128 x 128p blocks containing the reference information signals S is cut out, and Fourier transformed again. After this operation, each of the locations of the reference information signals S indicates the original location P represented by gray markings in Fig. 23(A) and Fig. 23(B).

However, it was found that if the image-space image having the reference information signals S embedded within is first reduced, for example by the enlarging/reducing rate of 0.8 before the second Fourier transformation, then the frequency component values of the reference information signals S will shift inwardly of the original location P where the reference information signals S are first embedded, as indicated by black markings P' in Fig. 23(A).

Likewise, it was found that if the image-space image having the reference information signals S embedded within is first enlarged, for example by the enlarging/reducing rate D of 1.2 before the second Fourier transformation, then the frequency component values of the reference information signals S will shift outwardly of the original location P where the reference information signals S are first embedded, as indicated by the black markings P' in Fig. 23(B).

From the above, it is clear that the location of the watermark signal embedded into a Fourier-space image of a predetermined image will shift laterally or outwardly, or toward the center when the image is enlarged or reduced.

The original image size detecting method and the digital-watermark detecting method according to the present invention use this behavioral characteristics of predetermined information embedded into the Fourier-space image, thereby making possible to detect the sizes of the original image and digital watermark information embedded into the original image.

A basic technical process in the original image size detecting method and/or the digital-watermark detecting method is an encoder/decoder process to detect the size of the original image by using the Fourier-space, as an application of the above described principle.

Specifically, in the encoding operation, for example:

    1) The obtained subject image is divided into blocks each having a size of 128 x 128, and if there is any remaining, then zero data is added to make up the block size.

2) Each of the block images is Fourier transformed and predetermined reference information signal S is embedded into a predetermined location P. The intensity of the reference information signal to be embedded is adjusted in accordance with the height of the image frequency component at the location P.

3) Each of the block images carrying the reference information signal S is reverse-Fourier-transformed back into the original block position of the obtained subject image.

The decoding operation thereafter is:

1) The enlarging/reducing deforming operation is performed to the subject image after the subject image is transformed back the image-space image. When the enlarging/reducing rate is between 0.5 and 1.0 for example, the operation is the reducing operation, whereas when the enlarging/reducing rate is between 1.0 and 2.0, the operation is the enlarging operation.

It should be noted that the size of each image to be enlarged/reduced is 128 x 128.

2) A plurality of enlarging/reducing rates are used to prepare the plural sets of enlarged or reduced block images. These block images are Fourier transformed again into the Fourier-space images, and from each of the Fourier-space images, frequency component is picked up individually at the embedding location P of the reference information signal S in the image.

In the above operation, preferably, the frequency component value is an average value.

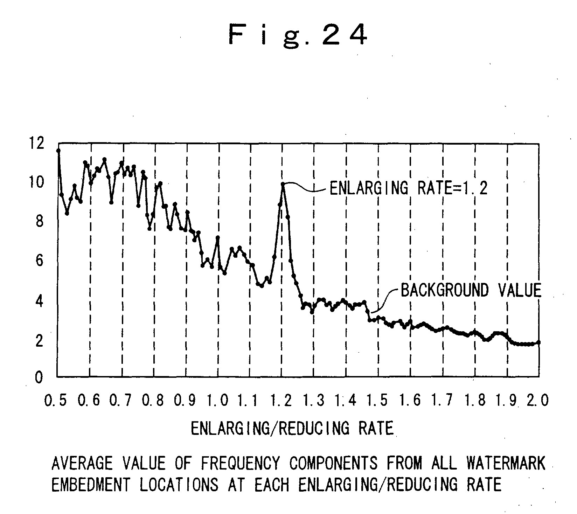

By integrating or arraying the obtained frequency component values in an ascending or descending order in accordance with the size of enlarging/reducing rate, a graph as shown in Fig. 24 is obtained.

3) From the graph shown in Fig. 24, as necessary, noise component such as influence from surroundings (influences by integration of the original image frequency component at each location of embedment) is removed. Thereafter, a series of graphs of the frequency component values are checked if there is a specific frequency component value outstanding from surrounding values.

A reason why the above operation according to the present invention creates the frequency component value outstanding from surrounding frequency component values in the series of graphs of the frequency components values may be explained as follows:

Specifically, if an image carrying an embedded digital watermark information is enlarged/reduced, the embedded frequency component (the reference information signal) becomes out of the original position. Thus, when the size of the image is varied by using a plurality of enlarging/reducing rates, and the frequency component value is detected at the location where the reference information signal was embedded, then the frequency component value is found to be the maximum value if the image size is equal to the original image size.

4) If the outstanding frequency component value is found, determination is made that the value of the enlarging/reducing rate D corresponding to the outstanding frequency component value is the enlarging/reducing rate D used when the obtained subject image was made from the original image by changing the size of the image.

In other words it becomes possible by the method described above, to determine the unknown size of the original image from which the obtained subject image was made.

In other words, from the graphs in Fig. 23, it is determined that the obtained subject image is an image made by enlarging the original image by the enlarging/reducing rate D of 1.2.

Therefore, by performing a reverse operation to the obtained subject image, or according to the above example, by reducing the obtained subject image at the enlarging/reducing rate D of 1/1.2, the estimated original image 1' can be reproduced.

Thereafter, the digital watermark information is retrieved from the reproduced original image 21' by using a publicly known method, and the retrieved digital watermark information is compared with the digital watermark information carried by the original image 21 whose source is already known. By these operations, it becomes possible to identify if the obtained subject image comes from the same source or not.

Therefore, by using the original image size detecting method and the digital-watermark detecting method according to the present invention, it becomes possible to confirm the source of an image if the image is made by tampering a known original image, i.e. by performing the enlarging/reducing deforming operation, thereby deleting or making illegible the digital watermark information initially embedded in the original image. Thus, it becomes possible to determine if the obtained subject image is made by tampering the original image from a known source or is an imitation thereof created separately. In addition, it also becomes possible to determine at which level of the market the tampering was made.

Hereinafter, description will be made in further detail for the embodiment of the original image deforming-method detecting method, the original-image-size method and the digital-watermark detecting method that use the original image deforming-method detecting device 300, the original-image-size detecting device 100, and the digital-watermark detecting device 200 according to the present invention.

Specifically, first, a basic constitution of the original image deforming-method detecting method according to the present invention comprises the steps of: embedding a predetermined digital watermark information S at a predetermined location of a Fourier-space image 20 prepared by Fourier transformation of an obtained subject image 22; changing the Fourier-space image 20 back into an image-space image by reverse-Fourier-transformation; individually changing the image size of the image-space image 30 by using a plurality of enlarging/reducing rates (D1, D2, D3,... Dn) selected from a predetermined range of the enlarging/reducing rates D; preparing Fourier-space images 40 by Fourier transforming each of the differently-sized image-space images 30; detecting a frequency component of the reference information signal S embedded in advance, from each of the Fourier-space images 40; arraying a plurality of frequency components of the reference information signal S obtained from each of the Fourier-space images 40 into a predetermined sequence according to the size of the enlarging/reducing rates D1, D2, D3,...Dn; and checking to see if there is a frequency component value outstanding from surrounding frequency component values: and if there is a certain frequency component value outstanding from the surrounding frequency component values, then the subject image 22 is determined to have been made by enlarging/reducing an original image. A basic constitution of the original image size detecting method according to the present invention comprises the steps of: embedding a predetermined digital watermark information Sat a predetermined location of a Fourier-space image 20 prepared by Fourier transformation of an obtained subject image 22; changing the Fourier-space image 20 back into an image-space image by reverse-Fourier transformation; individually changing the image size of the image-space image 30 by using a plurality of enlarging/reducing rates (D1, D2, D3,...Dn) selected from a predetermined range of the enlarging/reducing rates D; preparing Fourier-space images 40 by Fourier transforming each of the differently-sized image-space images 30; detecting a frequency component of the reference information signal S embedded in advance, from each of the Fourier-space images 40; arraying a plurality of frequency components of the reference information signal S obtained from each of the Fourier-space images 40 into a predetermined sequence according to the size of the enlarging/reducing rates D1, D2, D3,...Dn; and checking to see if there is a frequency component value outstanding from surrounding frequency component values: and if there is a certain frequency component value outstanding from the surrounding frequency component values, then the subject image 22 is determined to have been made from the estimated original image 21' by changing the size of the image by the enlarging/reducing rate D corresponding to the frequency component value outstanding from the surrounding frequency component values.

Specifically, the above two aspects of the present invention makes possible the following options for example, for a person who is an owner of copyright to a certain image carrying a predetermined embedded digital watermark information and being sold in the market. (In this case, the image which is being sold with the predetermined digital watermark information embedded, is the original image 21. The original image 21 is an image whose source is already known.) If there is marketed another image 22 which is close to, similar to or looks identical with the original image 21, yet the source of the image 22 is unknown, and further, the digital watermark information is deleted or made illegible, and therefore a presumed original image 21' (hereinafter called presumed original image 21') cannot be confirmed as the true source, then the image 22 may be brought in as the subject image 22, and by testing the subject image 22 using the original image size detecting method and the digital-watermark detecting method according to the present invention, it becomes possible to confirm if the presumed original image 21 is the true original image or not.

Therefore, in the present invention, first, it is necessary that the original image 21 is an image whose source is already known.

Further, in the present invention, the obtained image 22 is an image which is generally similar to the original image 21, and whose digital watermark information is deleted or illegible.

Still further, according to the present invention, the original image 21 and the obtained image 22 are still images.

On the other hand, according to the original-image size-determining method and the digital-watermark detecting method according to the present invention, the subject image information 22 presumed to have been tampered is a still image, and further, this image information is presumed to be made by enlarging/reducing the estimated original image information 21'.

Therefore, according to the present invention, when the subject image information 22 is analyzed as shown in Fig. 16, operation detecting means 17 which determines whether the subject image 22 was enlarged/reduced or rotated.

Specifically, it is preferable to utilize the above described arrangement.

According to the present invention, as has been described above, determination is first made as whether or not the obtained subject image 22 is a result of rotating deforming operation. If the obtained subject image 22 is determined to be the result of rotating deforming operation, the rest of the process is cancelled. If the subject image 22 is determined not to be the result of rotating deforming operation, then the rest of the process is executed to determine if the subject image 22 is a result of the enlarging/reducing deforming operation.

In other words, according to the present invention, the subject image 22 presumed to have been tampered thereby had its digital watermark information made illegible is analyzed to determine if the subject image 22 is enlarged/reduced, rotated or otherwise deformed.

The range of enlarging/reducing rate D used in the present invention is not particularly specified. Preferably however, a range is from 0. 5 through 2.0 as a practical range.

Preferably, such information about the enlarging/reducing rate as mentioned above is stored in advance, in enlarging/reducing rate storing means 26.

Further, preferably, according to the present invention, the detected frequency component value is an average value. Still further, when finding a peak value of the frequency component, it is preferable that background value is removed from all of the detected frequency components, and for this particular purpose, it is also preferable to provide noise removing means 33.

The digital-watermark detecting method according to the present invention uses the finding made by the above described original image size detecting method as to what value was used as the enlarging/reducing rate D when the subject image 22 was made by enlarging/reducing the original image 21' whose source is unknown. Specifically, the estimated original image 21' is reproduced by applying the reciprocal number 1/D of the obtained enlarging/ reducing rate D to the obtained image 22, and the estimated original image 21' is searched for the watermark information.

As a method for putting back the obtained subject image 22 into the estimated original image 21', for example, a publicly known method such as the affine transforming method may be used.

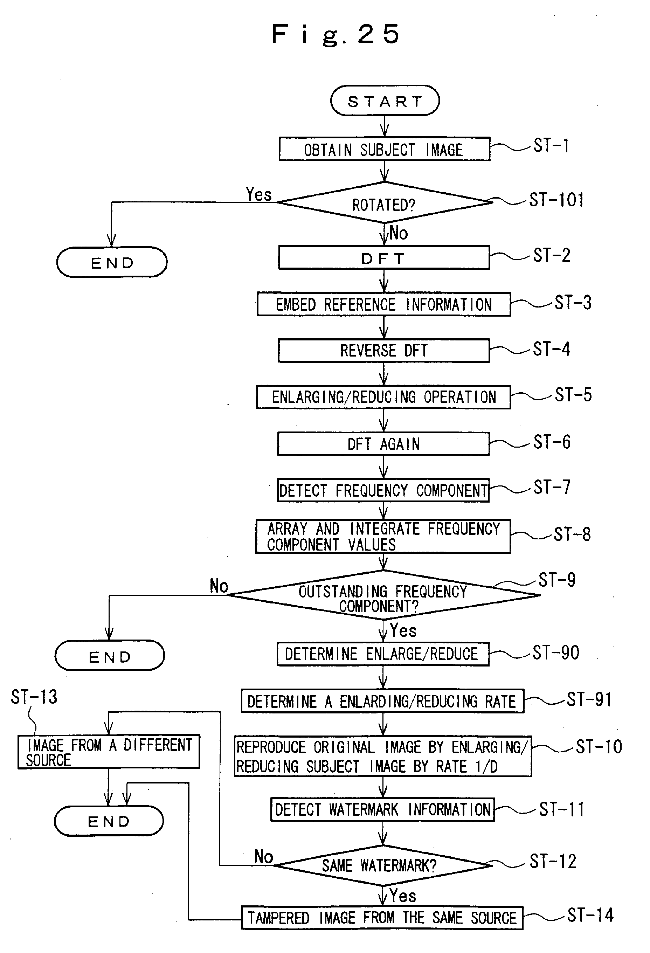

Now, a more detailed embodiment of the above described deformation-method detecting method, original image size detecting method and digital-watermark detecting method according to the present invention will be described hereinafter with reference to a flowchart in Fig. 25.

Specifically, when the original image size detecting method according to the present invention is started, Step ST-1 is executed to perform a first step of obtaining the subject image 22 which looks similar to the original image 21 from a known source but whose digital watermark information is not legible. At the same time, preferably Step ST-101 is also executed to determine if the subject image 22 is a rotated image or not: if the answer is YES, then the process ends but if the answer is NO, then the next step is performed.

Next, in Step ST-2, a second step is executed to Fourier transform the obtained subject image 22 into a first Fourier-space image 20. Then, Step ST-3 is executed to perform a third step of embedding predetermined reference information signal S at a predetermined location P of the first Fourier-space image 20.

Thereafter, the process goes to Step ST-4, where a fourth step of reverse-Fourier-transforming the Fourier-space image 20 provided with the reference information signal S into an image-space image 30. Then, in Step ST-5, a fifth step is executed to individually change the size of the image-space image 30 by using a plurality of enlarging/ reducing rates D1, D2, D3,...Dn selected from the enlarging/reducing rates D (D1, D2, D3,...Dn) within a predetermined range stored in the rate storing means 26.

Next, the process moves on to Step ST-6, where a six step of Fourier transforming each of the differently-sized image-space images 30 into a plurality of second Fourier-space images 40. Thereafter, in Step ST-7, a seventh step of detecting a frequency component of the reference information signal S embedded in the image 20 from each of the Fourier-space images 40.

Thereafter, in Step ST-8, an eighth step is performed to array the detected frequency components of the reference information signal S in a sequence by integration, or according to the size of the enlarging/reducing rates D, to obtain a waveform as shown in Fig. 25.

Next, the process moves on to Step ST-9, which determines whether or not there is a frequency component value corresponding to any of the enlarging/reducing rates Dn outstanding from surrounding frequency component values. If the answer is NO, then the process is brought to an END, with a determination that the subject image 22 is presumed not to have been rotated nor enlarged/reduced, but have been otherwise deformed.

On the other hand, if the answer in Step ST-9 is YES, i.e. if there is a frequency component value outstanding from the surrounding frequency component values, then Step ST-90 determines that the subject image 22 has been enlarged/reduced, and if needed, the determination is displayed in an appropriate displaying means 54, completing a ninth step of the original image deforming-method detecting method according to the present invention.

On the other hand, in an embodiment of the original-image size-determining method according to the present invention, as shown in a flowchart in Fig. 25, the same steps as in the above described original image deforming-method detecting method are executed from ST-1 through ST-9. From ST-9, the process moves, via ST-90, or directly to ST-91 to execute a 9a-th step, where it is determined that the enlarging/reducing rate Dn corresponding to the outstanding frequency component value is the enlarging/reducing rate Dn by which the size of the estimated original image 21' whose source is unknown was changed to make the obtained subject image 22.

It should be noted here that in the Step ST-9, when finding a peak value of the frequency component, it is preferable that background value is removed from all of the detected frequency components.

The steps of operation described above are the basic constitution of the original-image size-determining method according to the present invention.

In the digital-watermark detecting method according to the present invention, the same steps as in the above described original image size detecting method are executed from the first step through the 9a-th step. Thereafter, the finding made by the Step ST-9 of the original image size detecting method as to what value was used as the enlarging/reducing rate D when the subject image 22 was made from the estimated original image 21' is utilized. Specifically, a tenth step is executed in Step ST-10, where the estimated original image 21' is reproduced by applying the reciprocal number 1/D of the obtained enlarging/reducing rate D to the obtained image 22, and in Step ST-11, an eleventh step is executed, where the estimated original image 21' whose source in unknown is searched for watermark information.

Thereafter, the step moves onto Step ST-12, where the digital watermark information obtained from the estimated original image 21' whose source is unknown is compared to the digital watermark information of the original image 21 whose source is already known and stored in digital watermark information storing means 56 shown in Fig. 16, to determine if the two watermarks are identical with each other.

If the answer given in the Step ST-12 is NO, then the estimated source image 21' of the obtained subject image 22 can be presumed to be an imitated image which is not directly related to the original image 21 whose source is already known. If the answer given in the Step ST-12 is YES, then it can be presumed that the estimated source image 21' was made by tampering, i.e. by enlarging/reducing the original image 21 from the known source, and by deleting the digital watermark information.

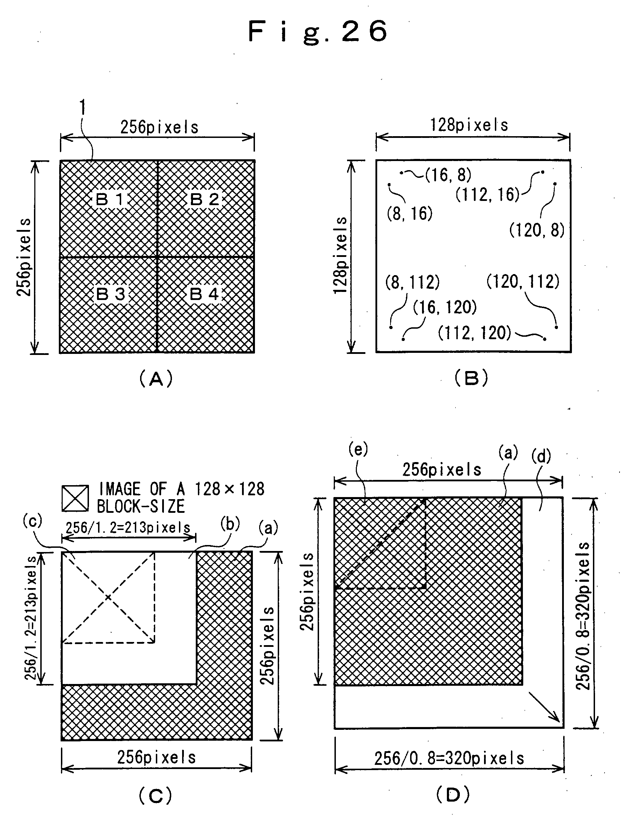

Next, a more detailed example of the above described original image deforming-method detecting method according to the present invention will be detailed with reference to Figs. 26 through 31.

Now, an assumption is made that a gray image, as shown in Fig. 26(A), having a pixel value of 128 and a size of 256 x 256 pixels is obtained as the subject image 22.

First, as shown in Fig. 26(A), the gray subject image 22 is divided into blocks each having a size of 128 x 128.

Next, as shown in Fig. 26(B), each block image is Fourier transformed, and a frequency component having an intensity of about five units is embedded as reference information signal, into predetermined locations (eight locations according to the present example).

More specifically, the frequency component having the predetermined intensity is embedded as the reference information signal at the following eight address locations of (8, 16), (16, 8), (112, 16), (120, 8), (8, 112), (16, 120), (112, 120), and (120, 112).

Further, by reverse-Fourier-transforming each of the block images, the reference information signal is embedded into the original image.

As shown in the above, the reference information signal is embedded in the Fourier space. When the image is reverse-Fourier-transformed into the image space, energy of the embedded digital watermark information is diffused into the image space, making the stains added to the original image less visible.

Thereafter, as shown in Fig. 26(C), the image (a) in which the reference information signal is embedded is reduced by the rate $\eta$ =1.2 ($\eta$ : Size of original image/Size of reduced image) to obtain an image (b).

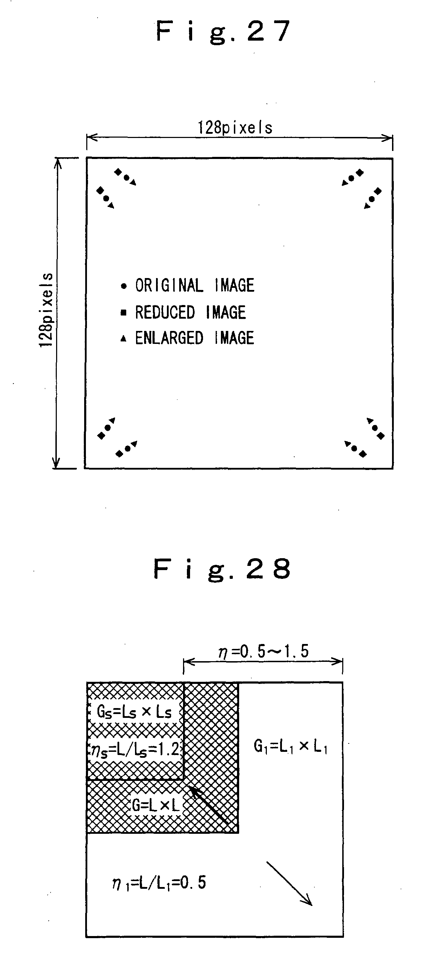

Next, as shown in Fig. 26(D), as has been described earlier, a block of partial image (c) having a size of 128 x 128 is cut out from the reduced image (b) and Fourier transformed. It was learned that as shown in Fig. 27, the locations each represented by • (black circle symbol) at which the reference information signal was first embedded moves inward to places represented by ▲ (black triangle symbol).

It should be noted here that● (black circle symbol) shown at an upper left corner in Fig. 27 represents zero-frequency component of the original image.

Next, as shown in Fig. 26(D), the image in which the reference information signal is embedded is enlarged by the rate $\eta$ =0.8 ($\eta$ : Size of original image/Size of reduced image) to obtain an image (d).

Thereafter, a block of partial image (e) having a size of 128 x 128 is cut out and Fourier transformed. It was learned that as shown in Fig. 27, the locations each represented by ● (black circle symbol) at which the reference information signal was first embedded moves outward to places represented by♦ (black diamond symbol).

It should be noted here that● (black circle symbol) shown at an upper left corner in Fig. 27 represents zero-frequency component of the original image.

Next, the size of the image obtained from the market is changed by rates selected from the range of 0.5 through 1.5 as shown in Fig. 28. (According to the present example, the same rate is applied in both directions along the x axis and the y axis.)

Then, as shown in Fig. 26(C) and Fig. 26(D), an upper- most left block (e) of image portions having the size 128 x 128 was cut out from each of the enlarged and reduced images, and then Fourier transformed.

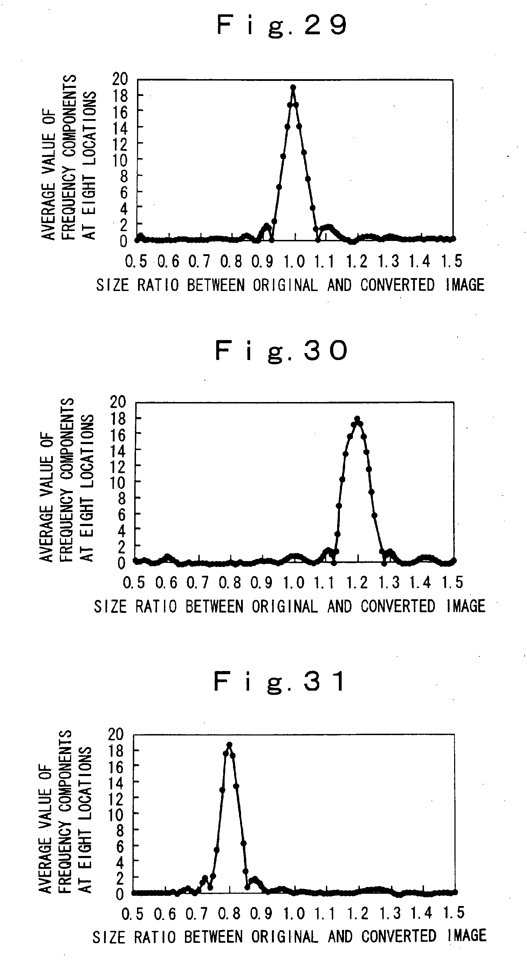

Next, for the Fourier-transformed block images, an average value of the eight frequency component values shown in Fig. 26(B) are calculated, to obtain the average frequency component value of the eight points for each of the images prepared by the different enlarging/reducing rates selected from the range from 0.5 through 1.5 as shown in Figs. 29, 30 and 31.

Thereafter, from graphs of the frequency component average values obtained from the above operation, a point outstanding from surrounding frequency component values is detected, through which determination can be made whether or not the obtained image is enlarged/reduced, or it becomes possible to calculate the rate used for the enlarging/reducing deforming operation.

Fig. 29 is a graph of frequency component average values detected from the obtained image which is an image not enlarged or reduced. The lateral axis represents the rate by which the size of the image was changed.

Fig. 30 is a graph of frequency component average values detected from the obtained image which is an image enlarged by the rate of 1.2. The lateral axis represents the rate by which the size of the image was changed.

Fig. 31 is a graph of frequency component average values detected from the obtained image which is an image reduced by the rate of 0.8. The lateral axis represents the rate by which the size of the image was changed.

It should be noted here that an actual image has much more frequency components than the image taken in the above example. Therefore, the frequency component graph detected from the locations where the reference information signal are embedded becomes more complex as shown in Fig. 24.

Specifically, this is due to the fact that the original frequency component of the image appears as the background value. Therefore, as has been described, the influence of the background value has to be considered.

Another mode of embodiment of the present invention is a recording medium storing a program for executing an original image deforming-method detecting method, the method comprising: a first step of obtaining a subject image which looks similar to an image from a known source but whose digital watermark information is not legible; a second step of Fourier transforming the subject image into a first Fourier-space image; a third step of embedding a predetermined reference information signal S to a predetermined location of the first Fourier-space image; a fourth step of reverse-Fourier-transforming the Fourier-space image provided with the reference information signal into an image-space image; a fifth step of individually changing the size of the image-space image using each of enlarging/reducing rates selected from a predetermined range of the enlarging/reducing rates; a six step of Fourier transforming each of the differently-sized image-space images into second Fourier-space images; a seventh step of detecting a frequency component values of the embedded reference information signal from each of the Fourier-space images; an eighth step of arraying each of the detected frequency components sequentially according to the size of the enlarging/reducing rates; and a ninth step of determining whether or not there is a frequency component value outstanding from surrounding frequency component values, and determining, if there is a frequency component value outstanding from surrounding frequency component values, that the obtained image was made by changing the size of the original image at the identified rate.

Further, still another mode of embodiment according to the present invention is a recording medium storing a program for executing an original image size detecting method, the method comprising: a first step of obtaining a subject image which looks similar to an image from a known source but whose digital watermark information is not legible; a second step of Fourier transforming the subject image into a first Fourier-space image; a third step of embedding a predetermined reference information signal S to a predetermined location of the first Fourier-space image; a fourth step of reverse-Fourier-transforming the Fourier-space image provided with the reference information signal into an image-space image; a fifth step of individually changing the size of the image-space image using each of enlarging/reducing rates selected from a predetermined range of the enlarging/reducing rates; a six step of Fourier transforming each of the differently-sized image-space images into second Fourier-space images; a seventh step of detecting a frequency component values of the embedded reference information signal from each of the Fourier-space images; an eighth step of arraying each of the detected frequency components sequentially according to the size of the enlarging/reducing rates; and a ninth step of determining whether or not there is a frequency component value outstanding from surrounding frequency component values, and determining, if there is a frequency component value outstanding from surrounding frequency component values, that the identified enlarging/reducing rate corresponding to the outstanding frequency component value is the rate at which the original image was enlarged/reduced to make the obtained image.

Still another mode of embodiment of the present invention is a recording medium storing a program for executing an original-image digital-watermark detecting method, the method comprising: a first step of obtaining a subject image which looks similar to an image from a known source but whose digital watermark information is not legible; a second step of Fourier transforming the subject image into a first Fourier-space image; a third step of embedding a predetermined reference information signal S to a predetermined location of the first Fourier-space image; a fourth step of reverse-Fourier-transforming the Fourier-space image provided with the reference information signal into an image-space image; a fifth step of individually changing the size of the image-space image using each of enlarging/reducing rates selected from a predetermined range of the enlarging/reducing rates; a six step of Fourier transforming each of the differently-sized image-space images into second Fourier-space images; a seventh step of detecting a frequency component values of the embedded reference information signal from each of the Fourier-space images; an eighth step of arraying each of the detected frequency components sequentially according to the size of the enlarging/reducing rates; and a ninth step of determining whether or not there is a frequency component value outstanding from surrounding frequency component values, and determining, if there is a frequency component value outstanding from surrounding frequency component values, that the identified enlarging/reducing rate corresponding to the outstanding frequency component value is the rate at which the original image was enlarged/reduced to make the obtained image; a tenth step of reproducing the original image by applying the reciprocal number of the enlarging/reducing rate identified in the ninth step; and an eleventh step of searching the reproduced original image for the watermark information.

Since the digital watermark information detecting device and the digital watermark information detecting method according to the present invention utilizes the technical arrangement as has been described above, the present invention provides a digital watermark information detecting device and a digital watermark information detecting method necessary for protecting proprietary right to the image information from illegal infringement, by making possible to detect the original digital watermark information from an illegally prepared still image information distributed in the market, created by executing the rotating deforming operation to the original image information which is a still image including a predetermined digital watermark information.

Further, since the original-image-size detecting device and the digital-watermark detecting method according to the present invention utilizes the technical arrangement as has been described above, the present invention has made possible to provide a device and a method enabling protection of proprietary right to the image information from illegal infringement, by making possible to detect the original digital watermark information from an illegally prepared still image information distributed in the market, created by executing the rotating deforming operation to the original image information which is a still image including a predetermined digital watermark information.

Each feature disclosed in this specification (which term includes the claims) and/or shown in the drawings may be incorporated in the invention independently of other disclosed and/or illustrated features.

Statements in this specification of the "objects of the invention" relate to preferred embodiments of the invention, but not necessarily to all embodiments of the invention falling within the claims.

The description of the invention with reference to the drawings is by way of example only.

The text of the abstract filed herewith is repeated here as part of the specification. The present invention provides a method for detecting digital watermark information inserted in original image information from image information in which the digital watermark information is deleted, altered or deformed by executing deforming operation to the original image information. The digital watermark information detecting device 100 comprises: means 2 which calculates a matrix and a transposed matrix about a system matrix from an obtained image information; means 3 which calculates an estimated initial image vector from the image information; means 4 which calculates a residual vector of the image information; means 5 which calculates a square error of the residual vector; means 6 which determines whether or not the residual vector square error value is a minimum value; means 7 which calculates a correcting vector; means 8 which calculates a reverse-rotated image; means 9 which substitutes an output from the reverse-rotated image calculating means with a value calculated by the estimated image vector calculating means; means 10 which obtains an estimated value of the original image information when the minimum value of the residual vector square error is detected; and digital watermark information displaying means 11 which retrieves digital watermark information from the estimated image information of the original image information and which displays the retrieved digital watermark information.

**Claims**

1. A digital watermark information detecting device comprising: analyzing means which analyzes an obtained subject image information expected to contain obtained digital watermark information, therein; image processing information determining means which determines whether the subject image information is image information subjected to a rotating deforming operation or image information subjected to an enlarging/reducing deforming operation; characteristic value calculating means which calculates a value of a predetermined characteristic to the subject image information based on a result of the above analysis and determination; image information estimating means which estimates image information of the subject image information by analyzing the characteristic value; and digital watermark information retrieving means which retrieves digital watermark information contained in the estimated image information.

2. A digital watermark information detecting device, comprising: image information analyzing means for an obtained image; matrix calculating means which calculates a matrix and a transposed matrix about a system matrix, from the image information; estimated initial image vector calculating means which calculates an estimated initial image vector from the image information; residual vector calculating means which calculates a residual vector between the image vector in the image information and a value obtained by multiplying the estimated initial image vector with the matrix; residual vector square error calculating means which calculates a square error of the residual vector; square error value determining means which determines whether or not the residual vector square error value is a minimum value; correcting vector calculating means which calculates a correcting vector; reverse-rotated image calculating means which calculates a reverse-rotated image; adding means which adds an output from the reverse-rotated image calculating means to a value calculated by the estimated image vector calculating means; means which obtains an estimated value of the original image information from the minimum value of the residual vector square error when the square error value determining means detects the minimum value of the residual vector square error; digital watermark information displaying means which retrieves digital watermark information from the estimated image information about the original image information and which displays the retrieved digital watermark information.

3. The digital watermark information detecting device according to Claim 2, wherein the image information is still-image information.

4. The digital watermark information detecting device according to any one of Claims 1 through 3, wherein the image information is presumed to have been subjected to a rotating deforming operation.

5. The digital watermark information detecting device according to any one of Claims 1 through 4, wherein said image information to be inspected is substantially identical or similar to the original image information, and source information thereof being confirmed.

6. The digital watermark information detecting device according to any one of Claims 1 through 5, wherein the square error value determining means is arranged to calculate the minimum square error value by applying an affine inverse matrix or numerical solution by means of Jacobian method.

7. A digital watermark information detecting method comprising the steps of: obtaining a subject image information expected to contain digital watermark information; performing analysis on the subject image information, thereby analyzing and determining whether the subject image information is image information subjected to a rotating deforming operation or image information subjected to an enlarging/reducing deforming operation; obtaining a value of a predetermined characteristic to the subject image information based on a result of the above analysis and determination; estimating image information of the subject image information by analyzing the characteristic value; and retrieving digital watermark information contained in the estimated image information.

8. A digital watermark information detecting method, comprising the steps of: obtaining image information; determining whether or not the obtained image information was subjected to a rotating deforming operation; calculating a matrix and a transposed matrix about a system matrix from the image information deformed by rotation; calculating an estimated initial image vector from the image information; calculating a residual vector between the image vector in the image information and a value obtained by multiplying the estimated initial image vector with the matrix; calculating a square error of the residual vector; determining whether or not the residual vector square error value is a minimum value; calculating a correcting vector and calculating a reverse-rotated image when the square error value of the residual vector is determined not to be the minimum value; adding the calculated reverse-rotated image information to a value calculated by the estimated image vector calculating means; repeating the residual vector square error calculation as necessary; estimating original image information from the minimum square error value when the square error value of the residual vector is determined to be the minimum value; and retrieving digital watermark information from the estimated original image information.

9. The digital watermark information detecting method according to Claim 8, wherein the image information is still-image information.

10. The digital watermark information detecting method according to Claim 8 or 9, wherein the image information is presumed to have been subjected to a rotating deforming operation.

11. The digital watermark information detecting method according to any one of Claims 8 through 10, wherein said image information to be inspected, is substantially identical or similar to the original image information, and source information thereof being confirmed.

12. The digital watermark information detecting method according to any one of Claims 8 through 11, wherein the square error value determining means is arranged to calculate the minimum square error value by applying an affine inverse matrix or numerical solution by means of Jacobian method.

13. A recording medium storing a program for executing a digital watermark information detecting method by computer, the method comprising: a first step of obtaining image information; a second step of determining whether or not the obtained image information was subjected to a rotating deforming operation; a third step of calculating a matrix and a transposed matrix about a system matrix from the image information deformed by rotation; a fourth step of calculating an estimated initial image vector from the image information; a fifth step of calculating a residual vector between the image vector in the image information and a value obtained by multiplying the estimated initial image vector with the matrix; a sixth step of calculating a square error of the residual vector; a seventh step of determining whether or not the residual vector square error value is a minimum value; an eighth step of calculating a correcting vector when the square error value of the residual vector is determined not to be the minimum value; a ninth step of calculating a reverse-rotated image from the correcting vector; a tenth step of adding the reverse-rotated image information thus calculated to a value calculated by the estimated image vector calculating means; an eleventh step of repeating the residual vector square error calculation as necessary; a twelfth step of estimating original image information from the minimum square error value when the square error value of the residual vector is determined to be the minimum value; and a step of retrieving digital watermark information from the estimated original image information.

14. An original image deforming-method detecting method, comprising the steps of: embedding a predetermined reference information signal to a predetermined location of a Fourier-space image prepared by Fourier transforming an obtained subject image; reverse-Fourier-transforming the Fourier-space image into an image-space image; individually changing the image size of the image-space image by using each one of a plurality of enlarging/reducing rates selected from a predetermined range of the enlarging/reducing rates; Fourier transforming again each of the differently-sized image-space images into Fourier-space images; detecting frequency components of the embedded reference information signal previously embedded into the image information from each of the Fourier-space images; arranging the frequency components of a plurality of the reference information signal detected from the a second Fourier-space images of a plurality of the image-space images each having a different size from the other, sequentially according to the size of the enlarging/reducing rates; and determining that the subject image was made by enlarging/reducing a prescribed original image when it can be determined that there is a frequency component value at a certain enlarging/reducing rate, outstanding from surrounding frequency component values.

15. The original image deforming-method detecting method according to Claim 14, wherein the subject image is an image substantially the same as or close to the original image whose source information is known.

16. The original image deforming-method detecting method according to Claim 14 or 15, wherein the original image and the obtained image are still images.

17. The original image deforming-method detecting method according to any one of Claims 14 through 16, wherein the predetermined range of the enlarging/reducing rate is from 0.5 through 2.0.

18. The original image deforming-method detecting method according to any one of Claims 14 or 17, wherein a background value is removed from all of the detected frequency components when determination about whether or not the frequency component value is outstanding from the surrounding frequency component values, is made.

19. An original image size detecting method comprising the steps of: embedding a predetermined reference information signal to a predetermined location of a Fourier-space image prepared by Fourier transforming an obtained image; reverse-Fourier-transforming the Fourier-space image into an image-space image; individually changing the image size of the image-space image using each one of a plurality of enlarging/reducing rates selected from a predetermined range of the enlarging/reducing rates; Fourier transforming again each of the differently-sized image-space images into Fourier-space images; detecting frequency component values of the embedded reference information signal previously embedded into the image to be inspected, from each of the Fourier-space images; arranging the frequency components of said reference information signal detected from the Fourier-space images of the image-space images each having a different size from the other, sequentially according to the size of the enlarging/reducing rates; and determining, when there is a frequency component value at a certain enlarging/reducing rate outstanding from surrounding frequency component values, that the obtained image was made by enlarging/reducing an obtained original image at the enlarging/reducing rate corresponding to a frequency component value which is outstanding from surrounding frequency component value.

20. The original image size detecting method according to Claim 19, wherein the subject image and the original image are images whose source is known.

**21.** The original image size detecting method according to Claim 19 or 20, wherein the obtained subject image is an image generally the same as or similar to the original image.

**22.** The original image size detecting method according to any one of Claims 19 through 21, wherein the original image and the obtained subject image are still images.

**23.** The original image size detecting method according to any one of Claims 19 through 22, wherein the predetermined range of the enlarging/reducing rate is from 0.5 through 2.0.

**24.** The original image size detecting method according to any one of Claims 19 through 23, wherein a background value is removed from all of the detected frequency components when determining whether or not there is a a peak value of a frequency component value.

**25.** A digital-watermark detecting method comprising the steps of: reproducing an original image by applying to an obtained subject image a reciprocal number of the enlarging/reducing rate at which the size of the original image was altered to that of the subject image, the rate being obtained by the original image size detecting method according to Claims 19 through 24; and detecting the reproduced original image for a watermark.

**26.** An original image deforming-method detecting device, for detecting the size of the original image from an obtained image, said device comprising: a first Fourier transforming means which Fourier transforms the obtained image into a first Fourier-space image; reference information signal embedding means which embeds a predetermined reference information signal at a predetermined location of the Fourier-space image prepared by Fourier transforming the obtained image; reverse Fourier transforming means which reverse-Fourier-transforms the Fourier-space image into which the reference information signal being imbedded into an image-space image ; enlarging/reducing rate storing means which stores a plurality of enlarging/reducing rates for changing the size of the image-space image; image-size changing means which sequentially selects desired enlarging/reducing rates from the enlarging/reducing rate storing means, and sequentially and individually changes the image size of the image-space image by individually using each of the selected enlarging/reducing rates; second Fourier transforming means which Fourier transforms again each of the image-space images the image signal of which being changed into second Fourier-space images; frequency component value detecting means which detects a frequency component value of the reference information signal from each of the second Fourier-space images; frequency component value arranging means which arrays a plurality of frequency component values obtained from each of the second Fourier-space images into a predetermined sequence according to the enlarging/reducing rates; outstanding frequency component value determining means which determines whether or not there is a plurality of frequency component values sequentially arranged; and original-image enlarging/reducing-deformation identifying means which determines, on the basis of an output value outputted from the outstanding frequency component value determining means, whether or not the subject image is a result of enlarging/reducing deforming operation performed to the original image or not.

**27.** The original image deforming-method detecting device according to Claim 26, wherein the outstanding frequency component value determining means has noise removing means which removes a background value from the frequency component values.

**28.** An original-image-size detecting device, for detecting the size of the original image from an obtained image, the device comprising: first Fourier transforming means which Fourier transforms the obtained image into a first Fourier-space image; reference information signal embedding means which embeds a predetermined reference information signal at a predetermined location of the Fourier-space image prepared by Fourier transforming the obtained image; reverse Fourier transforming means which reverse-Fourier-transforms the Fourier-space image into which the reference information signal had been embedded therein, into an image-space image ; enlarging/reducing rate storing means which stores a plurality of enlarging/reducing rates for changing the size of the image-space image; image-size changing means which sequentially selects desired enlarging/reducing rates from the enlarging/reducing rate storing means, and sequentially and individually changes the image size of the image-space image by individually using each of a plurality of the selected enlarging/reducing rates; second Fourier transforming means which Fourier again transforms each of the image-space images the image size of which being changed, respectively, into second Fourier-space images; frequency component value detecting means which detects a frequency component value of the reference information signal from each of the second Fourier-space images; frequency component value arranging means which arrays a plurality of frequency component values obtained from each of the second Fourier-space images into a predetermined sequence according to the enlarging/reducing rates; outstanding frequency component value determining means which determines whether or not there is a frequency component value outstanding from surrounding frequency component values; and original-image size identifying means which determines, when the outstanding frequency component is found, that the enlarging/reducing rate corresponding to the outstanding frequency component value is the enlarging/reducing rate whereby the image size of said obtained image had been changed from that of said original image.

29. The original-image-size detecting device according to Claim 28, wherein the outstanding frequency component value determining means has noise removing means which removes a background value from the frequency component values.

30. A digital-watermark detecting device comprising the original-image-size detecting device according to claim 28 or 29; original-image reproducing means which reproduces an original image by applying to an obtained subject image, a reciprocal number of the enlarging/reducing rate determined by the original-image-size detecting device, and digital watermark information detecting means which detects whether or not the digital watermark information existed in said reproduced original image by said original image reproducing means.

31. An original image deforming-method detecting method, comprising:

a first step of obtaining a subject image which looks similar to an original image from a known source but whose digital watermark information is not legible;
a second step of Fourier transforming the obtained subject image into a first Fourier-space image;
a third step of embedding a predetermined reference information signal to a predetermined location of the first Fourier-space image;
a fourth step of reverse-Fourier-transforming the Fourier-space image into which the reference information signal had been embedded therein, into an image-space image;
a fifth step of individually changing the size of the image-space image using each one of a plurality of enlarging/reducing rates selected from a predetermined range of the enlarging/reducing rates;
a six step of Fourier transforming again each of the differently-sized image-space images into second Fourier-space images;
a seventh step of detecting a frequency component value of the reference information signal which is previously embedded in said image, from each of the Fourier-space images;
an eighth step of arranging each of the detected frequency component values of said reference information signal, sequentially according to the size of the enlarging/reducing rates; and
a ninth step of determining whether or not there is a frequency component value outstanding from surrounding frequency component values at a certain enlarging/reducing rate among said sequentially arranged frequency component values, and determining, when there is the frequency component value outstanding from surrounding frequency component values, that the obtained subject image was made by applying the enlarging/reducing image deforming operation to a prescribed original image.

32. An original image size detecting method, comprising:

a first step of obtaining a subject image which looks similar to an original image from a known source but whose digital watermark information is not legible;
a second step of Fourier transforming the obtained subject image into a first Fourier-space image;
a third step of embedding a predetermined reference information signal to a predetermined location of the first Fourier-space image;
a fourth step of reverse-Fourier-transforming the Fourier-space image provided with the reference information signal into an image-space image;
a fifth step of individually changing the size of the image-space image using each one of a plurality of enlarging/reducing rates selected from a predetermined range of the enlarging/reducing rates;
a six step of Fourier transforming again each of the differently-sized image-space images into second Fourier-space images; a seventh step of detecting a frequency component value of the embedded reference information signal from each of the Fourier-space images;
an eighth step of arranging each of the detected frequency components of said respective reference information signals, sequentially according to the size of the enlarging/reducing rates; and
a ninth step of determining whether or not there is a frequency component value outstanding from surrounding frequency component values at a certain enlarging/reducing rate among said sequentially arranged frequency component values, and determining, when there is the frequency component value outstanding from surrounding frequency component values, that the obtained subject image was made from said original image by changing said image size with applying the enlarging/reducing rate corresponding to said outstanding frequency component value, to said original image.

33. The original image size detecting method according to Claim 32, wherein the original image is an image whose source is known.

34. The original image size detecting method according to Claim 32 or 33, wherein the obtained image has an image generally similar to the original image.

35. The original image size detecting method according to any one of Claims 32 through 34, wherein the original image and the obtained image are still images.

36. The original image size detecting method according to any one of Claims 32 through 35, wherein the predetermined range of the enlarging/reducing rate is from 0.5 through 2.0.

37. The original image size detecting method according to any one of Claims 32 through 36, wherein a background value is removed from all of the detected frequency components when determining whether or not there is a frequency component value outstanding from the surrounding frequency component values.

38. An original image size detecting method, comprising:

a first step of obtaining a subject image which looks similar to an image from a known source but whose digital watermark information is not legible;
a second step of Fourier transforming the obtained subject image into a first Fourier-space image;
a third step of embedding a predetermined reference information signal to a predetermined location of the first Fourier-space image;
a fourth step of reverse-Fourier-transforming the Fourier-space image provided with the reference information signal into an image-space image;
a fifth step of individually changing the size of the image-space image using each one of a plurality of enlarging/reducing rates selected from a predetermined range of the enlarging/reducing rates;
a six step of Fourier transforming again each of the differently-sized image-space images into second Fourier-space images;
a seventh step of detecting a frequency component value of the embedded reference information signal previously embedded into said Fourier-space images, from each of the Fourier-space images;
an eighth step of arranging each of the detected frequency components of said reference information signal, sequentially according to the size of the enlarging/reducing rates; and
a ninth step of determining whether or not there is a frequency component value outstanding from surrounding frequency component values at a certain enlarging/reducing rate among said sequentially arranged frequency component values, and determining, when there is the frequency component value outstanding from surrounding frequency component values, that the obtained subject image was made from said original image by changing said image size with applying the enlarging/reducing rate corresponding to said outstanding frequency component value, to said original image.
a tenth step of reproducing an original image by applying a reciprocal number of the enlarging/reducing rate obtained in the ninth step; and
an eleventh step of detecting whether or not a watermark information existed in said original image.

39. A recording medium storing a program for executing an original image size detecting method, the method comprising:

a first step of obtaining a subject image which looks similar to an original image from a known source but whose digital watermark information is not legible;
a second step of Fourier transforming the obtained subject image into a first Fourier-space image;
a third step of embedding a predetermined reference information signal to a predetermined location of the first Fourier-space image;
a fourth step of reverse-Fourier-transforming the Fourier-space image provided with the reference information signal into an image-space image;
a fifth step of individually changing the size of the image-space image using each one of a plurality of enlarging/reducing rates selected from a predetermined range of the enlarging/reducing rates;

a six step of Fourier transforming again each of the differently-sized image-space images into second Fourier-space images;

a seventh step of detecting a frequency component value of the embedded reference information signal previously embedded into said Fourier-space images, from each of the Fourier-space images;

an eighth step of arranging each of the detected frequency components of said reference information signal, sequentially according to the size of the enlarging/reducing rates; and

a ninth step of determining whether or not there is a frequency component value outstanding from surrounding frequency component values at a certain enlarging/reducing rate among said sequentially arranged frequency component values, and determining, when there is the frequency component value outstanding from surrounding frequency component values, that the obtained subject image was made from said original image by changing said image size with applying the enlarging/reducing rate corresponding to said outstanding frequency component value, to said original image.

**40.** A recording medium storing a program for executing an original image size detecting method, the method comprising:

a first step of obtaining a subject image which looks similar to an original image from a known source but whose digital watermark information is not legible;

a second step of Fourier transforming the subject image into a first Fourier-space image;

a third step of embedding a predetermined reference information signal to a predetermined location of the first Fourier-space image;

a fourth step of reverse-Fourier-transforming the Fourier-space image provided with the reference information signal into an image-space image;

a fifth step of individually changing the size of the image-space image using each one of a plurality of enlarging/reducing rates selected from a predetermined range of the enlarging/reducing rates;

a six step of Fourier transforming again each of the differently-sized image-space images into second Fourier-space images;

a seventh step of detecting a frequency component value of the embedded reference information signal previously embedded into said Fourier-space images, from each of the Fourier-space images;

an eighth step of arranging each of the detected frequency components of said reference information signal, sequentially according to the size of the enlarging/reducing rates; and

a ninth step of determining whether or not there is a frequency component value outstanding from surrounding frequency component values at a certain enlarging/reducing rate among said sequentially arranged frequency component values, and determining, when there is the frequency component value outstanding from surrounding frequency component values, that the obtained subject image was made from said original image by changing said image size with applying the enlarging/reducing rate corresponding to said outstanding frequency component value, to said original image.

a tenth step of reproducing an original image by applying a reciprocal number of the enlarging/reducing rate obtained in the ninth step; and

an eleventh step of determining the original image for watermark information.

# Ｆ ｉ ｇ. 1

# Ｆ ｉ ｇ. 2

(a) TRANSLATION   (b) ENLARGEMENT/REDUCTION   (c) ROTATION

ENLARGEMENT, REDUCTION AND ROTATION OF IMAGE WICH REAPECT TO
AN OPTIONAL POINT (xo, yo)

# Ｆｉｇ．3

(A)

PIXEL TO BE DETECTED d(x, y)

LINEAR INTERPOLATION METHOD

(B)

PIXEL TO BE DETECTED d(x, y)

CLOUEST POINT

NEAREST-NEIGHBORHOOD METHOD

# Ｆｉｇ．4

ROTATION AND REVERSE ROTATION PROCESSES OF IMAGE MAKE A SYSTEM

# Fig. 5

```
                    ┌──────────────┐
                    │    START     │
                    └──────┬───────┘
                           │
                           ▼
                ┌──────────────────────┐
                │     CREARE H^T        │────── ST-1
                └──────────┬───────────┘
                           │
                           ▼
                ┌──────────────────────┐
                │     OBTAIN go″        │────── ST-2
                └──────────┬───────────┘
                           │
    ┌──────────────────────▼───────────────────────┐
    │          CALCULATE RESIDUAL g′ -Hgk″          │────── ST-3
    └──────────────────────┬───────────────────────┘
                           │
    ┌──────────────────────▼───────────────────────────────┐
    │ CALCULATE SQUARE ERROR H = (g′ -Hgk″)^T (g′ -Hgk″)    │────── ST-4
    └──────────────────────┬───────────────────────────────┘
                           │          ST-5         ST-6
                           ▼          Yes        ┌───┐      ┌───────┐
                        ◇───────◇ ──────────────▶│   │─────▶│  END  │
                        │ If1 < ε?│               └───┘      └───────┘
                        ◇───────◇
                           │ No
                           ▼
    ┌──────────────────────────────────────────────┐
    │ CALCULATE CORRECTING VECTOR  α H^T(g′ -Hgk″)  │────── ST-7
    └──────────────────────┬───────────────────────┘
                           │
    ┌──────────────────────▼───────────────────────────────────┐
    │ OBTAIN REVERSE-ROTATED IMAGE gk″+1 =gk″+ α H^T(g′ -Hgk″)  │────── ST-8
    └───────────────────────────────────────────────────────────┘
```

EP 1 156 660 A2

# Ｆｉｇ.6

START

OBTAIN SUBJECT IMAGE INFORMATION — (S-1)

ROTATED? — (S-2)

CALCULATE H & $H^T$ — (S-3)

END

CALCULATE INITIAL ESTIMATED VECTOR $g_k''$ $(k \to 0)$ — (S-4)

SUBSTITUTION DATA EXIST? — (S-5)

RESIDUAL VECTOR $(g'-Hg_k'')$ $(k \to k+1)$ — (S-7)

CALCULATE RESIDUAL VECTOR $(g'-Hg_k'')$ $(k \to 0)$ — (S-6)

CALCULATE SQUARE ERROR I $= (g'-Hg_k'')^T (g'-Hg_k'')$ — (S-8)

MINIMUM I ? — (S-9)

ESTIMATE ORIGINAL IMAGE INFO g — (S-12)

CALCULATE CORRECTING VECTOR $\alpha H^T (g'-Hg_k'')$ — (S-10)

CALCULATE REVERSE-ROTATED PIXEL $g''_{k+1} = g''_k + \alpha H^T (g'-Hg_k'')$ — (S-11)

RETRIEVE DIGITAL WATERMARK INFORMATION — (S-13)

DISPLAY DIGITAL WATERMARK INFORMATION — (S-14)

END

36

# F i g. 7

ANGLE OF ROTATION

θ

RETRIEVE EDGE
OF IMAGE

# F i g. 8

| | | | | | | | | | |
|---|---|---|---|---|---|---|---|---|---|
| 0.0 | 0.0 | 0.0 | 0.0 | 0.0 | 0.0 | 0.0 | 0.0 | 0.0 | 0.0 |
| 0.0 | 0.0 | 0.0 | 0.0 | 0.0 | 0.0 | 0.0 | 0.0 | 0.0 | 0.0 |
| 0.0 | 0.0 | 1.0 | 1.0 | 0.5 | 1.0 | 0.5 | 0.5 | 0.0 | 0.0 |
| 0.0 | 0.0 | 0.5 | 1.0 | 1.0 | 0.5 | 1.0 | 1.0 | 0.0 | 0.0 |
| 0.0 | 0.0 | 1.0 | 0.5 | 1.0 | 1.0 | 0.5 | 1.0 | 0.0 | 0.0 |
| 0.0 | 0.0 | 1.0 | 1.0 | 1.0 | 0.5 | 0.5 | 1.0 | 0.0 | 0.0 |
| 0.0 | 0.0 | 0.5 | 0.5 | 1.0 | 0.5 | 0.5 | 1.0 | 0.0 | 0.0 |
| 0.0 | 0.0 | 1.0 | 0.5 | 0.5 | 1.0 | 1.0 | 0.5 | 0.0 | 0.0 |
| 0.0 | 0.0 | 0.0 | 0.0 | 0.0 | 0.0 | 0.0 | 0.0 | 0.0 | 0.0 |
| 0.0 | 0.0 | 0.0 | 0.0 | 0.0 | 0.0 | 0.0 | 0.0 | 0.0 | 0.0 |

(a) BEFORE ROTATION

# Fig. 9

| 0.00 | 0.00 | 0.00 | 0.00 | 0.00 | 0.00 | 0.00 | 0.00 | 0.00 | 0.00 |
|---|---|---|---|---|---|---|---|---|---|
| 0.00 | 0.00 | 0.06 | 0.65 | 0.40 | 0.07 | 0.00 | 0.00 | 0.00 | 0.00 |
| 0.00 | 0.00 | 0.18 | 0.78 | 0.92 | 0.64 | 0.76 | 0.29 | 0.14 | 0.00 |
| 0.00 | 0.00 | 0.54 | 0.75 | 0.82 | 0.78 | 0.73 | 0.78 | 0.40 | 0.00 |
| 0.00 | 0.00 | 0.84 | 0.82 | 0.92 | 0.99 | 0.89 | 0.92 | 0.36 | 0.00 |
| 0.00 | 0.97 | 0.61 | 0.78 | 0.98 | 0.50 | 0.50 | 0.97 | 0.10 | 0.00 |
| 0.00 | 0.90 | 0.74 | 0.58 | 0.81 | 0.50 | 0.81 | 0.81 | 0.00 | 0.00 |
| 0.00 | 0.02 | 0.20 | 0.28 | 0.63 | 0.97 | 0.75 | 0.44 | 0.00 | 0.00 |
| 0.00 | 0.00 | 0.00 | 0.00 | 0.00 | 0.10 | 0.23 | 0.09 | 0.00 | 0.00 |
| 0.00 | 0.00 | 0.00 | 0.00 | 0.00 | 0.00 | 0.00 | 0.00 | 0.00 | 0.00 |

(b) AFTER ROTATION

# Fig. 10

| 0.00 | 0.00 | 0.00 | 0.00 | 0.00 | 0.00 | 0.00 | 0.00 | 0.00 | 0.00 |
|---|---|---|---|---|---|---|---|---|---|
| 0.00 | 0.00 | 0.00 | 0.00 | 0.00 | 0.00 | 0.00 | 0.00 | 0.00 | 0.00 |
| 0.00 | 0.00 | 0.06 | 0.65 | 0.40 | 0.54 | 0.76 | 0.29 | 0.14 | 0.00 |
| 0.00 | 0.00 | 0.18 | 0.78 | 0.92 | 0.78 | 0.73 | 0.78 | 0.40 | 0.00 |
| 0.00 | 0.00 | 0.54 | 0.75 | 0.92 | 0.99 | 0.89 | 0.92 | 0.36 | 0.00 |
| 0.00 | 0.00 | 0.84 | 0.92 | 0.92 | 0.50 | 0.50 | 0.50 | 0.97 | 0.00 |
| 0.00 | 0.00 | 0.07 | 0.61 | 0.76 | 0.98 | 0.50 | 0.81 | 0.81 | 0.00 |
| 0.00 | 0.00 | 0.39 | 0.74 | 0.58 | 0.81 | 0.97 | 0.75 | 0.44 | 0.00 |
| 0.00 | 0.00 | 0.02 | 0.20 | 0.28 | 0.63 | 0.10 | 0.23 | 0.09 | 0.00 |
| 0.00 | 0.00 | 0.00 | 0.00 | 0.00 | 0.00 | 0.00 | 0.00 | 0.00 | 0.00 |

(a) INITIAL ESTIMATION VALUE

38

EP 1 156 660 A2

# Ｆｉｇ．１１

| 0.00 | 0.00 | 0.00 | 0.00 | 0.00 | 0.00 | 0.00 | 0.00 | 0.00 | 0.00 |
|---|---|---|---|---|---|---|---|---|---|
| 0.00 | 0.00 | 0.00 | 0.00 | 0.00 | 0.00 | 0.00 | 0.00 | 0.00 | 0.00 |
| 0.00 | 0.00 | 1.00 | 1.00 | 0.61 | 0.99 | 0.52 | 0.51 | 0.00 | 0.00 |
| 0.00 | 0.00 | 0.49 | 1.00 | 0.85 | 0.55 | 0.94 | 1.00 | 0.00 | 0.00 |
| 0.00 | 0.02 | 0.97 | 0.57 | 0.99 | 1.00 | 0.52 | 1.00 | 0.00 | 0.00 |
| 0.00 | 0.00 | 1.00 | 0.95 | 1.00 | 0.50 | 0.49 | 1.00 | 0.00 | 0.00 |
| 0.00 | 0.00 | 0.50 | 0.54 | 1.00 | 0.50 | 0.51 | 0.99 | 0.00 | 0.00 |
| 0.00 | 0.02 | 0.98 | 0.51 | 0.48 | 1.00 | 1.00 | 0.51 | 0.00 | 0.00 |
| 0.00 | 0.00 | 0.00 | 0.00 | 0.00 | 0.00 | 0.00 | 0.00 | 0.00 | 0.00 |
| 0.00 | 0.00 | 0.00 | 0.00 | 0.00 | 0.00 | 0.00 | 0.00 | 0.00 | 0.00 |

(b) TWENTY-FIFTH ESTIMATION VALUE

# Ｆｉｇ．１２

| 0.00 | 0.00 | 0.00 | 0.00 | 0.00 | 0.00 | 0.00 | 0.00 | 0.00 | 0.00 |
|---|---|---|---|---|---|---|---|---|---|
| 0.00 | 0.00 | 0.00 | 0.00 | 0.00 | 0.00 | 0.00 | 0.00 | 0.00 | 0.00 |
| 0.00 | 0.00 | 1.00 | 1.00 | 0.50 | 1.00 | 0.50 | 0.50 | 0.00 | 0.00 |
| 0.00 | 0.00 | 0.50 | 1.00 | 0.89 | 0.52 | 0.98 | 1.00 | 0.00 | 0.00 |
| 0.00 | 0.00 | 0.99 | 0.52 | 1.00 | 1.00 | 0.50 | 1.00 | 0.00 | 0.00 |
| 0.00 | 0.00 | 1.00 | 0.98 | 1.00 | 0.50 | 0.50 | 1.00 | 0.00 | 0.00 |
| 0.00 | 0.00 | 0.50 | 0.52 | 1.00 | 0.50 | 0.50 | 1.00 | 0.00 | 0.00 |
| 0.00 | 0.00 | 1.00 | 0.48 | 0.50 | 1.00 | 1.00 | 0.50 | 0.00 | 0.00 |
| 0.00 | 0.00 | 0.00 | 0.00 | 0.00 | 0.00 | 0.00 | 0.00 | 0.00 | 0.00 |
| 0.00 | 0.00 | 0.00 | 0.00 | 0.00 | 0.00 | 0.00 | 0.00 | 0.00 | 0.00 |

(c) FIFTIETH ESTIMATION VALUE

# Fig.13

| 0.00 | 0.00 | 0.00 | 0.00 | 0.00 | 0.00 | 0.00 | 0.00 | 0.00 | 0.00 |
|------|------|------|------|------|------|------|------|------|------|
| 0.00 | 0.00 | 0.00 | 0.00 | 0.00 | 0.00 | 0.00 | 0.00 | 0.00 | 0.00 |
| 0.00 | 0.00 | 1.00 | 1.00 | 0.50 | 1.00 | 0.50 | 0.50 | 0.00 | 0.00 |
| 0.00 | 0.00 | 0.50 | 1.00 | 1.00 | 0.50 | 1.00 | 1.00 | 0.00 | 0.00 |
| 0.00 | 0.00 | 1.00 | 0.50 | 1.00 | 1.00 | 0.50 | 1.00 | 0.00 | 0.00 |
| 0.00 | 0.00 | 1.00 | 1.00 | 1.00 | 0.50 | 0.50 | 1.00 | 0.00 | 0.00 |
| 0.00 | 0.00 | 0.50 | 0.50 | 1.00 | 0.50 | 0.50 | 1.00 | 0.00 | 0.00 |
| 0.00 | 0.00 | 1.00 | 0.50 | 0.50 | 1.00 | 1.00 | 0.50 | 0.00 | 0.00 |
| 0.00 | 0.00 | 0.00 | 0.00 | 0.00 | 0.00 | 0.00 | 0.00 | 0.00 | 0.00 |
| 0.00 | 0.00 | 0.00 | 0.00 | 0.00 | 0.00 | 0.00 | 0.00 | 0.00 | 0.00 |

(d) ONE HUNDREDTH ESTIMATION VALUE

# Fig.14

SQUARE ERROR I(1)

# Fig.15

SQUARE ERROR I(2)

# Fig.16

# Ｆｉｇ．１７

SIGNAL

FOURIER TRANSFORMATION

SIGNAL FERQUENCY

(a:IMAGE SPACE)

(b:FOURIER SPACE)

# Ｆｉｇ．１８

ORIGINAL SIGNAL

ENERGY-DIFFUSED WATERMARK

INVERSE FOURIER TRANSFORMATION

WATERMARK

(c:IMAGE SPACE)

(d:FOURIER SPACE)

# Ｆｉｇ．１９

(A)

(a;PERIOD=8Pixels,LENGTH=256Pixels)

128p→128p

(B)

(C)

DFT

(b;128PixelsSample;Rate=1.0)

(c;FREQUENCY=128/8=16)

ONE-DIMENSIONAL TIME SERIES HAVING A PERIOD OF 8p(p=pixela)
AND A LENGTH OF 256p IS SAMPLED BY THE SIZE OF THE ORIGINAL IMAGE.

# Fig.20

(A)

(a;PERIOD=8Pixels, LENGTH=256Pixels)

160p→128p

(B)

(C)

DFT

(b;128PixelsSample;Rate=128/160≈0.8)

(c;FREQUENCY>16)

ONE-DIMENSIONAL TIME SERIES HAVING A PERIOD OF 8p(p=pixels)
AND A LENGTH OF 256p IS REDUCED AND THEN SAMPLED.

# Fig.21

(A)

(a;PERIOD=8Pixels, LENGTH=256Pixels)

107p→128p

(B)

(C)

DFT

(b;128PixelsSample;Rate=128/107≈1.2)

(c;FREQUENCY<16)

ONE-DIMENSIONAL TIME SERIES HAVING A PERIOD OF 8p(p=pixels)
AND A LENGTH OF 256p IS ENLARGED AND THEN SAMPLED.

# Fig. 22

REDUCED PIXEL (R=0.8, f>16)
ORIGINAL IMAGE (R=1.0, f=16)
ENLARGED PIXEL (R=1.2, f<16)
ENLARGED PIXEL (R=1.2, f<16)
ORIGINAL IMAGE (R=1.0, f=16)
REDUCED PIXEL (R=0.8, f>16)

IF TIME SERIES SIGNALS ARE ENLARGED/REDUCED, THEIR
FREQUENCY COMPONENTS BECOME SMALL/LARGE.

# Fig. 23

ZERO-FREQUENCYCOMPONENT OF IMAGE

ZERO-FREQUENCYCOMPONENT OF IMAGE

ORIGINAL LOCATION
LOCATION AFTER MOVE

WHEN AN IMAGE IS REDUCED,
LOCATION OF THE EMBEDDED
WATERMARK SIGNAL WILL
MOVE TOWARD THE CENTER

LOCATION AFTER MOVE
ORIGINAL LOCATION

WHEN AN IMAGE IS ENLARGED,
LOCATION OF THE EMBEDDED
WATERMARK SIGNAL WILL
MOVE AWAY FROM THE CENTER

(a) FOURIER TRANSFORMATION VALUE
OF A REDUCED IMAGE

(b) FOURIER TRANSFORMATION VALUE
OF AN ENLARGED IMAGE

AN IMAGE WAS REDUCED/ENLARGED, AND THEN SAMPLED BY THE SIZE
OF 128×128PIXELS. FOURIER TRANSFORMED VALUES OF THE SAMPLED
IMAGES ARE SHOWN IN (a) AND (b) RESPECTIVELY.

# Fig. 24

AVERAGE VALUE OF FREQUENCY COMPONENTS FROM ALL WATERMARK
EMBEDMENT LOCATIONS AT EACH ENLARGING/REDUCING RATE

# Fig. 25

START

OBTAIN SUBJECT IMAGE — ST-1

ROTATED? — ST-101

Yes → END

No

DFT — ST-2

EMBED REFERENCE INFORMATION — ST-3

REVERSE DFT — ST-4

ENLARGING/REDUCING OPERATION — ST-5

DFT AGAIN — ST-6

DETECT FREQUENCY COMPONENT — ST-7

ARRAY AND INTEGRATE FREQUENCY COMPONENT VALUES — ST-8

OUTSTANDING FREQUENCY COMPONENT? — ST-9

No → END

Yes

DETERMINE ENLARGE/REDUCE — ST-90

DETERMINE A ENLARDING/REDUCING RATE — ST-91

REPRODUCE ORIGINAL IMAGE BY ENLARGING/REDUCING SUBJECT IMAGE BY RATE 1/D — ST-10

DETECT WATERMARK INFORMATION — ST-11

SAME WATERMARK? — ST-12

No

Yes

TAMPERED IMAGE FROM THE SAME SOURCE — ST-14

ST-13

IMAGE FROM A DIFFERENT SOURCE

END

# Fig. 26

(A)

(B)

(C)

(D)

# Ｆｉｇ.２７

128pixels

128pixels

- ORIGINAL IMAGE
- REDUCED IMAGE
- ENLARGED IMAGE

# Ｆｉｇ.２８

$\eta = 0.5 \sim 1.5$

$G_S = L_S \times L_S$

$\eta_S = L/L_S = 1.2$

$G_1 = L_1 \times L_1$

$G = L \times L$

$\eta_1 = L/L_1 = 0.5$

## Ｆ ｉ ｇ．２ ９

## Ｆ ｉ ｇ．３ ０

## Ｆ ｉ ｇ．３ １